(19) Europäisches Patentamt
European Patent Office
Office européen des brevets

(11) **EP 4 742 079 A1**

(12) **EUROPEAN PATENT APPLICATION**

(43) Date of publication:
**13.05.2026 Bulletin 2026/20**

(21) Application number: **25210175.3**

(22) Date of filing: **21.10.2025**

(51) International Patent Classification (IPC):
**G06F 30/27** (2020.01)     **G06F 30/337** (2020.01)

(52) Cooperative Patent Classification (CPC):
**G06F 30/27; G06F 30/337;** G06F 2119/06;
G06F 2119/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **12.11.2024 US 202463719148 P
15.10.2025 US 202519358676**

(71) Applicant: **GDM Holding LLC
Mountain View, CA 94043 (US)**

(72) Inventors:
• **Ruic, Dino
Mountain View, 94043 (US)**
• **Xu, Xiaoqing
Mountain View, 94043 (US)**
• **Costamagna, Andrea
Mountain View, 94043 (US)**

(74) Representative: **Marks & Clerk GST
1 New York Street
Manchester M1 4HD (GB)**

(54) **RESYNTHESIS FOR POST-MAPPING OPTIMIZATION**

(57)     The present technology includes a resynthesis engine for improving digital circuits' power, performance, and area (PPA). The resynthesis engine operates directly on a mapped netlist space. The resynthesis engine replaces subnetworks with low-cost structures from a database, which can be updated dynamically during optimization. The resynthesis engine can efficiently optimize for various objectives, including area, delay, and dynamic power. The resynthesis engine is also capable of significantly reducing glitching, which contributes to power consumption in arithmetic circuits.

Fig. 2

**Description**

CROSS-REFERENCE TO RELATED APPLICATIONS

This application claims the benefit of and priority to U.S. Provisional Application No. 63/719,148, filed November 12, 2024, the entire disclosure of which is incorporated herein by reference.

BACKGROUND

Electronic design automation (EDA), also referred to as electronic computer-aided design (ECAD), refers to a process, and set of software tools, used for designing electronic systems, such as integrated circuits (ICs), printed circuit boards (PCBs), and the like. The EDA process encompasses a series of steps to design and implement digital circuits from high-level specifications to physical hardware. Some steps in the EDA process include logic synthesis and physical design.

Logic synthesis is a process of converting an abstract specification of circuit behavior into a circuit design implementation in terms of logic gates. This involves transforming the abstract specification, such as a register-transfer level (RTL) description, into a network of logic gates, such as a logic gate-level netlist, that can be physically implemented on an IC. The logic synthesis process also includes logic optimization and technology mapping. Logic optimization involves optimizing the netlist based on design constraints and objectives, such as timing constraints and specific target implementation technology. Logic mapping involves selecting logical elements to implement the optimized netlist.

Objectives of the optimization process may include optimization of timing, area, and power of the resultant design. However, since accurate metrics, such as power, performance, and area (PPA) metrics, are only available after technology mapping is done, a common practice is to use proxy metrics to estimate the timing, area, and power metrics during logic optimization. For example, the node count of a netlist is often used to approximate the design area and the level count of the netlist is often used to approximate maximum delay. However, the correlation between level count and the maximum delay is not ideal or necessarily accurate. Therefore, using such proxy metrics during logical optimization may not yield the most optimal circuit designs in terms of, for example, PPA. Thus, such approaches can result in insufficient and/or ineffective solutions.

SUMMARY

The present technology is related to a versatile resynthesis engine capable of optimizing circuits after technology mapping for various objectives, including area, delay, and dynamic power. Thus, the technology provides resynthesis for post-mapping optimization.

Some embodiments include a computer-implemented method of resynthesis. The method includes identifying, by at least one processor, at least one cut within a netlist. The method includes obtaining, by the at least one processor, at least one sub-circuit from a dynamic database, wherein the at least one sub-circuit performs a same function as the at least one cut. The method includes determining, by the at least one processor, a first cost value for the at least one cut based on a cost function. The method includes determining, by the at least one processor, a second cost value for the at least one sub-circuit based on the cost function. The method includes replacing, by the at least one processor, the at least one cut with the at least one sub-circuit in the netlist when the first cost value is larger than the second cost value. The method includes replacing, by the at least one processor, the at least one sub-circuit with the at least one cut in the dynamic database when the second cost value is larger than the first cost value.

In some embodiments, the cut is a supercell comprising a combination of multiple cells from a standard cell library. In some embodiments, the supercell includes at least one cell that is a multi-output cell. In some embodiments, the supercell is a multi-output supercell. In some embodiments, the at least one cut is a structural cut, a non-structural cut, or a dependency cut.

In some embodiments, identifying the at least one cut within the netlist comprises: extracting a sub-network of nodes within the netlist based on a target node; and identifying the at least one cut within a window.

In some embodiments, identifying the at least one cut within the window comprises: identifying a set of nodes between the target node and inputs to the at least one cut; and expanding the set of nodes to include additional nodes with fan-ins contained within the set of nodes.

In some embodiments, identifying the at least one cut within the netlist comprises: performing a window simulation to identify a dependency cut as the at least one cut.

In some embodiments, determining the first cost value and/or determining the second cost value comprises: operating a multi-objective function that optimizes at least one of metric selected from a group comprising area, timing, power, toggle activity, or glitching.

In some embodiments, the dynamic database comprises respective keys for corresponding stored sub-circuits, wherein each of the respective keys is based on a truth table of the corresponding stored sub-circuits. In some embodiments, obtaining the at least one sub-circuit from the dynamic database comprises: generating a key based on a binary representation of a truth table of the at least one cut; and querying the dynamic database using the key to obtain the at least one sub-circuit.

In some embodiments, the cost function includes an evaluation of dynamic switching activity within the netlist. Additionally or alternatively, the cost function includes an evaluation of area, timing, power, toggle activity, and/or glitching.

In some embodiments, the method further comprises determining, using heuristic filtering, whether substituting the at least one cut with the at least one sub-circuit violates at least one design constraint of the netlist.

In some embodiments, the method further comprises performing design-space exploration by dynamically adjusting one or more optimization parameters toward minimizing a specified metric.

In some embodiments, the method further comprises operating a machine learning model to learn a performance metric to be used for evaluating the first cost value and the second cost value.

In some embodiments, the netlist comprises a gate-level netlist. The netlist may be a technology-mapped netlist. The netlist may be a gate-level and/or technology-mapped netlist intended to be physically implemented on an IC.

In some embodiments, the method further comprises outputting an updated technology-mapped and/or gate-level netlist. The method may further comprise outputting the updated technology-mapped and/or gate-level netlist for fabrication of an integrated circuit. The updated netlist may be intended for use in fabricating an integrated circuit. The updated netlist may be exclusively for use in fabricating integrated circuits.

In some embodiments, replacing the at least one sub-circuit with the at least one cut in the dynamic database, may result in an updated database. The updated database may be used for resynthesizing netlists.

In some embodiments, the method further comprises outputting a design file (e.g. a graphic design system (GDSII) or open artwork system interchange standard (OASIS) file) for manufacturing by a fabrication facility, e.g. by a foundry.

In some embodiments, the method further comprises manufacturing, by a fabrication facility, an integrated circuit based on the netlist.

Some embodiments include a method of fabricating an integrated circuit, by a fabrication facility, based on the netlist.

Some embodiments include a computer-readable storage media. The computer-readable storage media is configured to store instructions, which when executed by at least one processor is to cause the at least one processor to perform resynthesis according to any of the methods described previously and/or as discussed herein.

Some embodiments include a computing system. The computing system comprises at least one memory device and at least one processor connected to the at least one memory device. The at least one memory device is configured to store instructions for performing resynthesis during electronic design automation. The at least one processor is configured to execute the instructions to: identify at least one cut within a netlist; obtain at least one sub-circuit from a dynamic database, wherein the at least one sub-circuit performs a same function as the at least one cut; determine a first cost value for the at least one cut based on a cost function; determine a second cost value for the at least one sub-circuit based on the cost function; replace the at least one cut with the at least one sub-circuit in the netlist when the first cost value is larger than the second cost value; and replace the at least one sub-circuit with the at least one cut in the dynamic database when the second cost value is larger than the first cost value.

In some embodiments, the cut is a supercell comprising a combination of multiple cells from a standard cell library. In some embodiments, the supercell includes at least one cell that is a multi-output cell. In some embodiments, the supercell is a multi-output supercell. In some embodiments, the at least one cut is a structural cut, a non-structural cut, or a dependency cut.

In some embodiments, the identification of the at least one cut within the netlist includes: extract a sub-network of nodes within the netlist based on a target node; and identify the at least one cut within a window.

In some embodiments, the identification of the at least one cut within the window includes: identify a set of nodes between the target node and inputs to the at least one cut; and expand the set of nodes to include additional nodes with fan-ins contained within the set of nodes.

In some embodiments, the identification of the at least one cut within the netlist comprises: perform a window simulation to identify a dependency cut as the at least one cut.

In some embodiments, the determination of the first cost value and/or the determination of the second cost value comprises: operate a multi-objective function that optimizes at least one of metric selected from a group comprising area, timing, power, toggle activity, or glitching.

In some embodiments, the dynamic database comprises respective keys for corresponding stored sub-circuits, wherein each of the respective keys is based on a truth table of the corresponding stored sub-circuits.

In some embodiments, obtaining the at least one sub-circuit from the dynamic database comprises: generate a key based on a binary representation of a truth table of the at least one cut; and query the dynamic database using the key to obtain the at least one sub-circuit.

In some embodiments, the cost function includes an evaluation of dynamic switching activity within the netlist. Additionally or alternatively, the cost function includes an evaluation of area, timing, power, toggle activity, and/or glitching.

In some embodiments, the at least one processor is configured to execute the instructions to: determine, using heuristic filtering, whether substituting the at least one cut with the at least one sub-circuit violates at least one design constraint of the netlist.

In some embodiments, the at least one processor is configured to execute the instructions to: perform design-space exploration by dynamically adjusting one or more optimization parameters toward minimizing a specified metric.

In some embodiments, the at least one processor is configured to execute the instructions to: operate a machine learning model to learn a performance metric to be used for evaluating the first cost value and the second cost value.

In some embodiments, the netlist comprises a gate-level netlist. The netlist may be a technology-mapped netlist. The netlist may be a gate-level and/or technology-mapped netlist intended to be physically implemented on an IC.

In some embodiments, the at least one processor is configured to execute the instructions to output an updated technology-mapped and/or gate-level netlist. The updated technology-mapped and/or gate-level netlist may be for fabrication of an integrated circuit. The updated netlist may be intended for use in fabricating an integrated circuit. The updated netlist may be exclusively for use in fabricating integrated circuits.

In some embodiments, replacing the at least one sub-circuit with the at least one cut in the dynamic database, may result in an updated database. The updated database may be used for resynthesizing netlists.

In some embodiments, the at least one processor is configured to execute the instructions to output a design file (e.g. a graphic design system (GDSII) or open artwork system interchange standard (OASIS) file) for manufacturing by a fabrication facility, e.g. by a foundry.

BRIEF DESCRIPTION OF THE DRAWINGS

The patent or application file contains at least one drawing executed in color. Copies of this patent or patent application publication with color drawing(s) will be provided by the Office upon request and payment of the necessary fee.

Fig. 1 illustrates an example electronic design automation flow for use with aspects of the present technology.
Fig. 2 illustrates an example resynthesis system in accordance with aspects of the present technology.
Fig. 3 illustrates an example function analyzer flow in accordance with aspects of the present technology
Fig. 4 illustrates an example of a database entry storing two netlists in accordance with aspects of the present technology.
Fig. 5 illustrates an example word-level dynamic power simulator in accordance with aspects of the present technology.
Fig. 6 illustrates an example network for tracking activity-window partition in accordance with aspects of the present technology.
Fig. 7 illustrates an example graph of based on aspects of the present technology.
Fig. 8 illustrates an example resynthesis process in accordance with aspects of the present technology.
Figs. 9-10 illustrate an exemplary system in which aspects of the technology can be practiced.

DETAILED DESCRIPTION

Improving PPA in very large-scale integration (VLSI) circuits is a fundamental concern of modern electronic design. Performance degradation can happen at any stage of a design flow, and bad design choices at early stages can induce biases that detrimentally affect the overall design. Consequently, addressing these issues early in the process, such as at the logic synthesis stage, may help optimize the circuit's performance metrics.

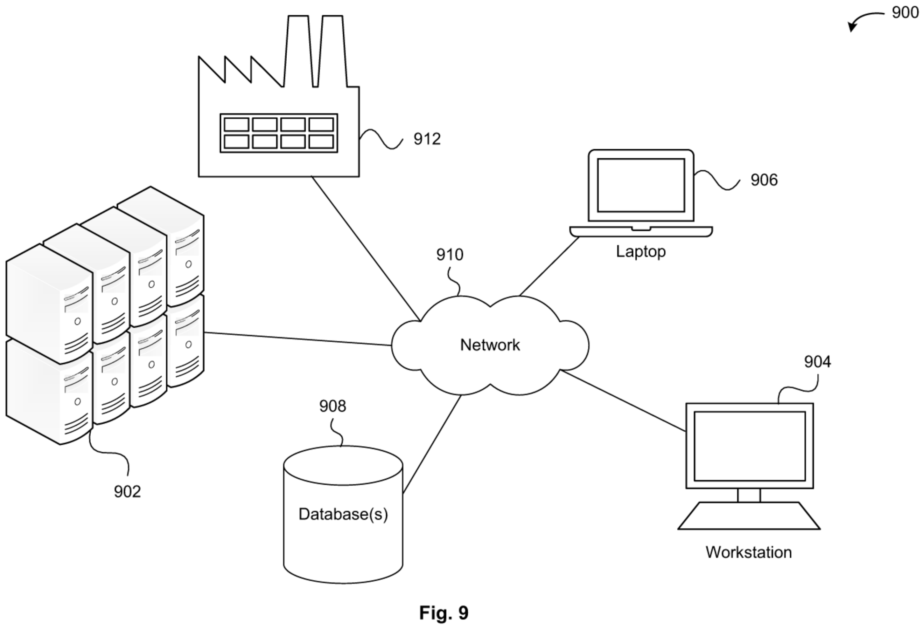

Logic synthesis typically includes logic optimization of an abstract circuit representation, such as optimization of an AND-inverter graph (AIG) at the logic optimization stage, and mapping the abstract circuit representation to a netlist of gates in a specific technology through technology mapping. This may include mapping abstract Boolean functions, such as logic gates and the like, into (or onto) standard cells (or logic gates) defined in a technology library provided by a foundry, such as foundry 912 of Figs. 9-10. This may involve going from an abstract graph optimization space with abstract metrics, such as nodes and levels, to a concrete physical netlist space where a relatively accurate evaluation of PPA metrics of a design can take place.

In general, AIG optimization is based on the assumption that optimizing an AIG for a technology-independent cost will result in a mapped network with a better technology-dependent cost. However, during the mapping process, optimality is usually lost since abstract AIG metrics do not always correlate well to the standard cell netlist space. For instance, as technology libraries become increasingly detailed, incorporating features such as multiple-output cells, the correlation between technology-independent optimization and performance metrics after technology mapping becomes more complex. This observation has led to growing interest in incorporating post-mapping technology-dependent optimization. Resynthesis is a type of optimization that can operate directly in the mapped netlist space and can potentially improve the PPA metrics of a design.

Addressing relevant metrics, such as glitching whose estimation is infeasible at the AIG level, may assist in achieving comprehensive PPA optimization. Glitching is a phenomenon where internal signals change state multiple times during a single clock cycle, which can contribute significantly to dynamic power consumption. For example, in arithmetic circuits, glitching may amount to up to 70% of the total dynamic power. Given the increasing prevalence of artificial intelligence (AI) and/or ML systems, which rely heavily on arithmetic operations, minimizing glitching has been identified as an important challenge to overcome.

Existing post-mapping optimization techniques often focus on a single optimization objective, such as area, limiting their ability to explore design space trade-offs. Aspects of the present technology addresses this limitation by introducing a versatile post-mapping optimizer, also referred to herein as a resynthesis engine, capable of systematically exploring trade-offs between performance metrics, including glitching activity. The optimizer supports modern library features, such as multiple-output cells, and employs an enhanced Lazy Man's Synthesis (LMS) paradigm for efficient optimization. The optimizer is also capable of optimizing circuits for various performance objectives, including area under delay constraints, delay under area constraints, and power under area and delay constraints. The optimizer may also provide improvements in workload-dependent optimization by reducing glitching.

The present technology is related to resynthesis techniques, including a resynthesis algorithm that supports multi-output supergates, standard cells, and/or supercells. By operating directly on a technology-mapped netlist space, the resynthesis aspects of the present technology overcome the limitations of traditional resynthesis approaches. Moving optimization to the mapped netlist space allows for technology-awareness and more flexibility than traditional optimization techniques. Additionally, optimization of the mapped netlist space may provide more accurate performance metrics, such as PPA, and may be easier to investigate tradeoffs. Furthermore, optimization of the mapped netlist space may allow for reuse of optimal sub-circuits.

The present technology includes a dynamic approach to database-based resynthesis. By leveraging the structural information within a mapped netlist, the optimizer/resynthesis engine may identify potential sub-networks from the mapped netlist that can potentially be optimized. These sub-networks can be used to update and enrich a dynamic resynthesis database, leading to a more comprehensive and effective optimization process. In some aspects, a resynthesis database is used during resynthesis to replace individual cells or supercells in a netlist. Here, the resynthesis engine replaces sub-networks in a netlist with low-cost structures stored in the resynthesis database. Thus, the resynthesis aspects can efficiently optimize for various objectives, such as area, delay, and dynamic power. In some configurations, the resynthesis database can be updated dynamically during optimization to include sub-networks that have efficient arrangements or configurations. The resynthesis database may be a dynamic database that adds good groups of cells into the database as the optimization takes place. In some examples, good parameters for an annealing flow, such as a simulated annealing (SA) flow, may include the size of circuit/netlist cuts, an amount of effort in dependency cuts, a schedule for changing optimization metrics, and/or the like.

Additional aspects of the present technology introduce multiple types of optimization metrics to evaluate netlist performance. Such optimization metrics can include, for example, area, timing, and glitch power. Glitch power optimization addresses some of the pain points of chip design in modern technologies. In some aspects, each group of cells and/or cuts may be stored in the dynamic database in association with one or more of these optimization metrics.

Additionally or alternatively, since arbitrary optimization metrics can be used with the resynthesis approach of the present technology, in some aspects, one or more optimization metrics may be learned using an ML model, such as a neural network and/or the like. This can be useful in cases such as glitch power optimization, where it is difficult to manually define a cell-level metric and/or when numerous glitch power simulation data can be used to train a cell-level glitch power ML model. In some aspects, optimization metrics can be defined as a global differentiable function, which in cases like glitch power optimization, may provide global information on how to improve a circuit. This can be used to update several cuts simultaneously, which may be used to remap parts of the circuit, which can allow escaping locally minima during optimization. Additional aspects of the present technology include annealing resynthesis through optimizing in various directions iteratively, such as area, power, timing/delay, power, glitching, glitching power, etc. resynthesizing into different dimensions.

The resynthesis aspects of the present technology are capable of improving PPA metrics of digital circuits. The resynthesis aspects may provide PPA improvements directly on netlists using, for example, openly available benchmark circuits, such as École Polytechnique Fédérale de Lausanne (EPFL) benchmark suite, International Symposium on Circuits and Systems (ISCAS) benchmark suite, and/or International Workshop on Logic and Synthesis (IWLS) benchmark suite. Additionally, the resynthesis aspects of the present technology are capable of significantly reducing glitching. Experimental results show that the resynthesis aspects can reduce glitching by up to 17.18% and total switching by 8.91% when used for workload-dependent optimization.

*1. Example EDA Flow*

EDA is a process, and set of software tools, used for designing electronic systems, such as ICs, PCBs, and the like. The EDA process encompasses a series of steps to design and implement digital circuits from high-level specifications to physical hardware. The process mainly includes steps, such as system design or specification, logic design, logic synthesis, physical design, physical synthesis, physical verification, and tapeout. Additional or alternative steps/processes may be included in an EDA process in other implementations.

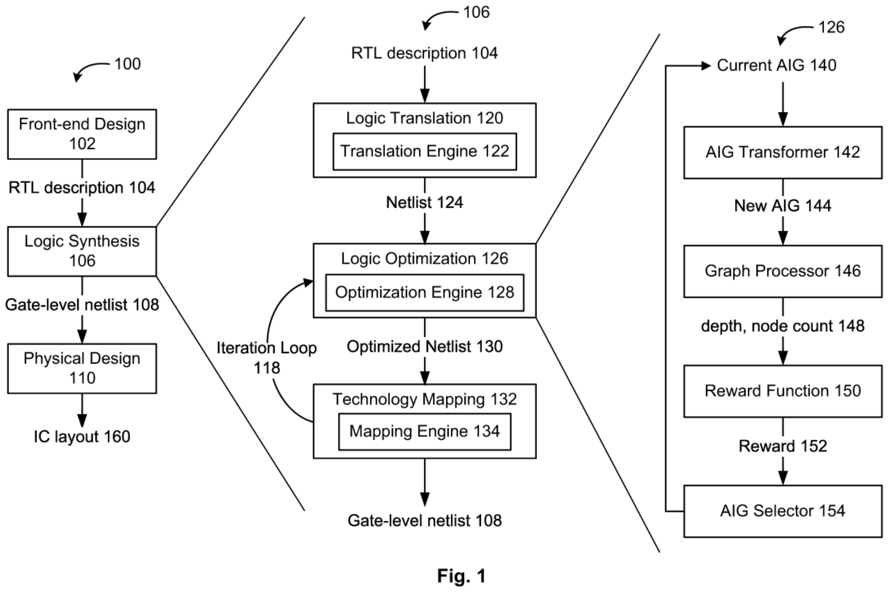

Fig. 1 depicts an example EDA flow 100 in accordance with aspects of the present technology. In this example, the EDA flow 100 includes a front-end design flow 102, logic synthesis flow 106, and physical design flow 110. Various commercially available or proprietary EDA tools may be used to perform design and simulation tasks of the EDA flow 100, such as register-transfer level (RTL) synthesis tools, system design and functional verification tools, logic synthesis tools such as graphing engines and optimization engines, physical design tools, circuit design and simulation tools, PCB design tools, and/or the like.

The front-end design flow 102 is the initial phase of the digital design process, which involves creating the functional specification and logical implementation of a circuit. The front-end design flow 102 typically begins with architectural design, where the overall structure and major components of the system are defined based on the project requirements and constraints. Next, an abstract specification of circuit behavior is coded, created, or generated, which specifies the circuit's behavior in terms of data flow between registers and the logical operations performed on that data. In this example, the abstract specification is in the form of an RTL circuit description 104. The RTL description 104 may be expressed using a hardware description language (HDL), such as VHDL, Verilog, MyHDL, Clash, Chisel, and the like. The RTL description 104 defines the flow of data between registers and the logical operations performed on that data. Additionally or alternatively, the RTL description 104 may describe bitstreams for programmable logic devices (PLDs), such as programmable array logic (PAL), complex PLDs, field-programmable gate arrays (FPGAs), programmable System-on-Chip (SoC) platforms, and the like. The RTL description 104 may be generated using a high-level synthesis (HLS) tool. HLS tools automatically synthesize circuits specified using high-level programming languages, such as C, C++, SystemC, MATLAB, and the like, into a functionally-equivalent RTL hardware implementation, such as RTL description 104. In some implementations, functional verification follows the abstract specification coding, such as RTL coding, which involves simulation and testing to ensure the abstract specification, such as the RTL code 104, accurately implements the intended functionality and meets desired design specifications.

Logic synthesis 106 is a process of converting an abstract specification of circuit behavior, such as the RTL description 104, into a circuit design implementation in terms of logic gates, flip-flops, and the like that can be physically implemented on an IC. The logic synthesis flow 106 transforms, translates, or transcodes the RTL description 104 into gate-level descriptions, such as logic gate-level netlist 108. In this example, the logic synthesis flow 106 includes three stages: a logic translation stage 120 performed by a translation engine 122, a logic optimization stage 126 performed by an optimization engine 128, and a technology mapping stage 132 performed by a technology mapping engine 134. The output of the logic synthesis flow 106, such as the logic gate-level netlist 108, may be the input to a physical processing stage 110 of an EDA process.

The logic translation stage 120 involves the translation engine 122 translating the RTL description 104 into a non-optimized logical netlist 124 based on, for example, technology libraries of standard cells, gates, and/or other logical components.

At the logic optimization stage 126, the optimization engine 128 optimizes the netlist 124 based on design constraints and objectives. For example, the synthesis constraints can include environment constraints, design constraints, and logic optimization constraints. The environment constraints include aspects of the external environment where the circuit is intended to operate, such as temperature, voltage, drive, load, and/or the like. The design constraints include design-related aspects of the circuit such as, for example, maximum transition time, maximum fan-out, minimum capacitance, maximum capacitance, and/or the like. The logic optimization constraints include constraints related to aspects of the optimization of the netlist 124, such as timing constraints and area constraints. The timing constraints may limit, for example, clock networks, timing paths, critical path delays, asynchronous logic timing, and the like. The area constraints may limit, for example, the maximum number of logic units and the like. To optimize netlist 124, the optimization engine 128 may be configured to operate an optimization algorithm, which may operate according to logic optimization flow 126. In the example of Fig. 1, the logic optimization flow 126 is a SA flow for AIG optimization in which a randomly selected sequence of transformations is applied, by an AIG transformer 142, to a given (current) AIG 140, and the new AIG depth and node count are used to evaluate the cost, such as reward 152. However, it should be noted that the logic optimization flow 126 could represent another optimization algorithm/flow, such as an evolutionary algorithm, genetic algorithm, Bayesian optimization algorithm, machine learning (ML) approaches, and/or other approach(es).

At the technology mapping stage 132, the technology mapping engine 134 selects logical elements, such as logic gates, to implement the optimized netlist 130. This may include, for example, selecting logic unit instances, such as logic gates, from the same or different technology libraries to implement a gate-level logic netlist 108. The selection may be based on various constraints, such as time sequence or other timing constraints, PPA constraints (e.g., power consumption, performance in terms of speed and/or delay, and circuit area), logic unit characteristics, logical relationships, and the area of logic units provided by the technology libraries. In some implementations, the mapping engine 134 may perform technology mapping based on supergates or supercells. A supergate is a composite logic structure formed by combining multiple smaller gates into a single, larger gate that performs an equivalent function, enabling more efficient optimization and simplification of the circuit design. Similarly, a supercell is a composite logical structure formed from a combination of multiple cells from, for example, a standard cell library or the like.

In some implementations, the mapping engine 134 is capable of performing covering using structural cuts. Here, the mapping engine 134 may select specific structural cuts within a logic network, such as optimized netlist 130, to create an optimized cover of the circuit. The cover of the circuit refers to a selected set of logic elements or sub-circuits that collectively implement the entire functionality of the circuit. Creating a cover means finding an arrangement of smaller, optimized segments (or nodes) that together fully cover all the required operations and outputs of the circuit without redundancy. This cover can be optimized for factors such as area, delay, and/or power, and is often achieved by identifying efficient groupings (such as through cuts) that maintain the circuit's original functionality but in a more optimal configuration. Thus, the mapping engine 134 may cover optimized netlist 130 using structural cuts with gates or cells implemented in a given technology library. Additionally, the mapping engine 134 may also operate according to a load independent assumption, which is the assumption that a constant and fixed pin-to-pin propagation delay is assumed for each pin of a gate or cell. Thus, the delay from a pin to another pin is assumed to not depend on the output load of the cell.

The netlists 124, 130, 108 are descriptions of the connectivity of an electronic circuit. Each netlist 124, 130, 108 is usually in the form of a logical data structure, such as an AIG. An AIG is a directed acyclic graph that represents a structural implementation of the logical functionality of a circuit or network. As the name suggests, an AIG usually comprises a network of AND gates and inverters. The embodiments discussed herein involve netlists in the form of AIGs, and thus, the optimization engine 128 may be considered as an AIG optimization engine. However, it should be understood that other logical data structures, such as binary decision diagrams (BDD), sum-of-product forms ($\Sigma o\Pi$), Boolean networks, and the like, could be used instead of AIGs in other implementations. In this regard, it should also be understood that the optimization engine may additionally or alternatively be configured to optimize the type of logical data structure used to represent the netlists 124, 130, 108.

The AIG optimization engine 128 is to find an optimal AIG 130 that has the best performance in comparison from among a set of candidate AIGs. The optimization stage in logic synthesis has become an important factor affecting the feasibility of IC physical design. Most logical synthesis optimization engines analyze performance metrics, such as PPA, and the like, that are only available after technology mapping 132 is completed, which may necessitate the use of an iteration loop 118 to further refine optimized netlists 130.

For example, as shown by Fig. 1, the logic optimization flow 126 involves providing a current AIG 140 to an AIG transformation function 142, which applies a randomly selected transformation to the current AIG 140 to produce a new AIG 144. The current AIG 140 may be the unoptimized netlist 124, or the current AIG 140 may be an optimized netlist 130 such as during or after an iteration loop 118. The transformation may include any change to the arrangement or configuration of the current AIG 140 including, for example, node substitution (e.g., randomly selecting one or more nodes in the AIG 140 and replace those node(s) with an equivalent but structurally different node or subgraph), node insertion (e.g., inserting one or more new nodes in the AIG 140 with one or more connections, which may also be randomly selected), node deletion (e.g., deleting one or more existing nodes in the AIG by removing the node(s) and connecting its inputs to its outputs or bypassing the node(s) entirely), edge rewiring (e.g., randomly changing the connections (edges) between two or more nodes in the AIG 140, such as by rerouting the output of a node to feed into a different node or swapping the inputs of a node), subgraph replacement (e.g., identifying a subgraph within the AIG 140 and replacing the identified subgraph with a different subgraph that implements the same or similar logical function, but having a different structure), node reordering (e.g., reordering the sequence of gates in a way that maintains logical equivalence, but changes the structure of the AIG 140, such as by rearranging the order in which one or more operations are performed without changing the overall logic), inversion pushing (e.g., pushing inversion through one or more nodes in the AIG 140, such as by moving one or more inverters from a first side of a gate/node to a second side of the gate/node, or distributing one or more inverters across different parts of the AIG 140), balancing or rebalancing the AIG 140 (e.g., rearranging the structure of the AIG 140 to reduce or increase the number of levels (depth) in the AIG 140), and/or the like. Any additional or alternative methodology of generating and applying transformations to AIGs 140 may be used.

A graph processor 146 performs graph processing on the new AIG 144 to identify or determine a depth (level count) and node count 148 for the new AIG 144. The graph processor 146 may use a suitable graph search or graph traversal algorithm (e.g., breadth-first search (BFS), depth-first search (DFS), etc.), topological sorting, levelization approaches, dynamic programming approaches, and/or the like. The depth and node count 148 is provided to a reward function 150, which uses the depth and node count 148 to calculate a reward value 152 for the new AIG 144. For example, the reward function 150 may calculate, as the reward value 152, a weighted sum or weighted average of the depth value and the node count. Then, an AIG selection function 154 decides whether to accept the new AIG 144 or not based on the reward value 152. For example, if the reward value 152 for the new AIG 144 is less than a reward value of the current AIG 140, then the new AIG 144 may be selected; otherwise, the current AIG 140 is kept. In either case, the selected AIG (i.e., either the new AIG 144 or the current AIG 140) may be fed through the optimization process 104 again in an attempt to discover a more efficient AIG. This process may repeat for a predefined or configurable number of times. For example, in some SA implementations, the optimization process 104 may be repeated for about 1 million iterations. In other implementations, fewer or more iterations may be predefined or configured. Thus, the first time that the optimization process 104 is run, the current AIG 140 may be the initial netlist 124 (or an AIG produced using the netlist 124). After the initiation run of the optimization engine 104, the current AIG 140 may be the new AIG 144 or the same, current AIG 144 based on which AIG is selected by the AIG selection function 154.

Each logic gate may be a device, or collection of hardware elements, that performs a Boolean function or a logical operation performed on one or more binary inputs that produces a binary output. Examples of such logic gates can include NOT or inverter (INV) gates, AND gates, OR gates, NOT AND (NAND) gates, NOT OR (NOR) gates, exclusive OR (XOR) gates, exclusive NOR (XNOR) gates, compound logic gates such as AND-OR-Inverters (AOI) and OR-AND-Inverters (OAI), and/or other gates, some or all of which may be formed from combinations of various diodes, transistors, and/or other electrical elements. Various combinations of logic gates may form logic circuits, such as multiplexers, demultiplexers, registers, arithmetic logic units (ALUs), encoders, decoders, computer memory, microprocessors, and/or the like.

The physical design flow 110 transforms the logical representation of a circuit, such as the gate-level netlist 108 from the logic synthesis flow 106, into a physical layout that can be manufactured as an IC, such as IC layout 160. In some implementations, the physical design flow 110 may include the following steps or stages: floorplanning, placement, clock tree synthesis (CTS), routing, power planning, and transistor synthesis (also known as transistor-level implementation or cell synthesis). The physical design flow 110 may be an iterative process where one or more of the stages/steps may be revisited multiple times as the circuit's design evolves or becomes more optimized. Additionally or alternatively, at least some of the stages/steps in the physical design flow 110 may be run or executed multiple times before moving to a subsequent stage to optimize or refine the desired output of those stages. Additionally or alternatively, at least some of the stages/steps of the physical design flow 110 may be executed concurrently or run simultaneously, such as to optimize placement, routing, and transistor sizing at the placement, routing, transistor synthesis stages, respectively. Additionally or alternatively, the timing and/or order of individual stages may vary depending on the specific EDA flow 100 and EDA tools being used. For example, in some implementations, aspects of transistor synthesis or one or more other stages may be integrated earlier in the EDA process 100. Furthermore, the physical design flow 110 may include additional or alternative steps/stages than those mentioned herein. For example, the physical design flow 110 may include thermal analysis, physical verification, and/or tape-out steps/stages.

In the example of Fig. 1, the physical design 110 may begin with the gate-level netlist 108 being input to the floorplanning stage. In addition to the gate-level netlist 108, additional inputs to the physical design flow 110, such as at the floorplanning, may include, for example, a technology library, timing library, physical library, design constraints, and/or the like. The technology library, provided by the foundry, such as foundry 912, containing information about the available standard cells, geometry of each cell, macros, via information, design rules, manufacturing process(es), and/or the like. This includes both the physical layout details indicated by, for example, a library exchange format (LEF) file, and the electrical/timing characteristics indicated by, for example, a liberty timing file (LIB). The timing library, which may be the LIB part of the technology library, specifies the timing characteristics of standard cells and macros, such as the aforementioned electrical/timing characteristics. The physical library, which may also be part of the LEF part of the technology library, describes the physical layout and geometry of standard cells and macros. The geometric information may be used for initial placement and routing estimations. Additionally or alternatively, the LEF file may contain rules related to the fabrication process, placement and routing design rules, and process information for various layers. The design constraints include clock definitions, timing requirements, and other design rules. Design constraints may be included in a standard design constraints (SDC) file, sometimes referred to as a Synopsys design constraints (SDC) file. In some implementations, a power file, such as a unified power format (UPF) file, which specifies the power intent of the design, including power domains, power switches, and other power management strategies.

Floorplanning is the initial step in physical design flow 110 where the IC's overall structure is determined. Floorplanning typically involves partitioning the chip area into functional blocks and allocating space for each block in consideration of factors, such as chip size and/or shape, aspect ratio, locations of input/output (I/O) pads (e.g., power, ground, and signal pads), core utilization, and/or other factors. In some implementations, floorplanning may also include initial power planning and placement of input, output, macro blocks, and core modules in or on the chip.

The cells may be relatively small, standardized functional elements of digital logic circuits such as, for example, logic gates (e.g., AND, OR, NOT, NAND, NOR, XOR, etc.), flip-flops, latches, small analog components (e.g., transistors, resistors, capacitors), and/or the like. Cells are typically provided by a foundry or technology library vendor, such as foundry 912 of Figs. 9-10. The macro blocks (or macros) may be relatively large, complex functional blocks that are predesigned and pre-characterized such as, for example, memory blocks (e.g., SRAM, DRAM, etc.), analog/mixed-signal blocks (e.g., analog-to-digital converters (ADCs), digital-to-analog converters (DACs), phased-locked loops (PLLs), etc.),

processor cores, I/O interfaces, and/or the like. Macros are sometimes designed by specialized developer/designer teams, obtained from third-party intellectual property (IP) providers, and/or provided by a foundry or technology library vendor, such as foundry 912 of Figs. 9-10.

A result or output of the floorplanning stage is a floorplan. The floorplan may include or indicate, for example, chip dimensions and shape, placement of macro blocks and I/O pads, power grid structure, major routing channels, and/or the like. In some examples, the floorplan is embodied as a design exchange format (DEF) file, which describes the physical layout of the circuit. In some implementations, the floorplanning stage may also output an initial power plan file, such as a UPF file, which specifies the power intent of the design, including power domains, power switches, and other power management strategies. The power plan file may be used for power-aware design, analysis, and optimization, such as during the power planning stage and transistor synthesis stage. The UPF file is typically introduced after the initial floorplanning stage and/or placement stage, as the power intent becomes more defined and/or refined.

The placement stage involves determining and placing the location, position, and/or orientation of standard cells and macro blocks within the chip area. The placement stage may aim to optimize for factors like wire length, timing, power consumption, and area utilization. In some implementations, the placement may be performed automatically according to the floorplan and/or the other files imported into the physical design flow 110, such as those described previously. In some implementations, the placement may be performed automatically using analytical algorithms such as quadratic placement, nonlinear programming, or convex optimization, or using force-directed placement, partitioning-based placement, SA-based placement, or other optimization techniques.

A result or output of the placement stage is a placed netlist, which may include the location, position, and/or orientation of each standard cell and macro block, as well as updated floorplan information. In some implementations, the placed netlist may be embodied as a DEF file, which may be referred to herein as a placed DEF file. In some examples, the placed DEF file is an updated version of the floorplan DEF. Additionally or alternatively, the placed DEF file is a separate file from the floorplan DEF. Additionally or alternatively, the placement stage may also output an updated SDC file and/or placement reports including, for example, congestion and timing estimates.

The CTS involves creating a network or tree structure, which may be referred to as a "clock tree" or the like, to distribute a clock signal to sequential elements (e.g., flip-flops, etc.) in the circuit to ensure a clock signal is delivered uniformly across the design. The clock tree is a hierarchical structure of buffers and inverters that drive the clock signal. The clock tree may be generated by inserting and sizing clock buffers and inverters along the clock path and may also consider factors such as load balancing, clock gating, and multiple clock domains. The clock tree may be generated based on the gate-level netlist 108, technology library, floorplan, and clock specifications. Here, the floorplan may provide the physical locations of cells and flip-flops, and the clock specifications may define clock sources, target clock sinks, and constraints like maximum skew or delay. As an example, the clock specifications may be included in the SDC file. while attempting to minimize clock skew and latency while managing power consumption. Minimizing skew involves attempting to reduce the differences in arrival times between different clocked elements, improving timing performance and overall design reliability.

A result or output of the CTS is a clock tree netlist, which may include information about the inserted clock buffers and inverters, the locations of the inserted clock buffers and inverters, and clock routing information that was added during the CTS. In some implementations, the clock tree netlist may be embodied as a DEF file, which may be referred to herein as a clock tree DEF file. In some examples, the clock tree DEF file is an updated version of the placed DEF file and/or floorplan DEF. Additionally or alternatively, the clock tree DEF file is a separate file from the floorplan DEF and/or the placed DEF file. Additional outputs of the CTS may include updated timing constraints, clock tree spice netlist, clock tree report(s) indicating skew, latency, power, and/or the like.

The routing stage establishes the physical connections between placed components using metal layers. In some implementations, the routing stage automatically adds wires to connect the placed components while conforming to the design rules, such as those specified by the design constraints file mentioned previously. Routing algorithms or autorouters typically navigate the design rules while optimizing for timing, crosstalk, and manufacturability. The routing algorithms or autorouters may include grid-based routers, gridless routers, graph theory-based routers, negotiation-based routers, and/or the like.

A result or output of the routing stage is a routed netlist, which includes detailed routing information for all nets, via locations, metal layer assignments, and/or other like information. In some implementations, the routed netlist may be embodied as a DEF file, which may be referred to herein as a routed DEF file. In some examples, the routed DEF file is an updated version of the clock tree DEF file, placed DEF file, and/or floorplan DEF. Additionally or alternatively, the routed DEF file is a separate file from the floorplan DEF, the placed DEF file, and/or clock tree DEF file.

The power planning stage involves designing and optimizing the power distribution/delivery network (PDN) for the chip considering factors such as current density, metal resistance, switching activity, and the like based on, for example, the floorplan, placed netlist 118, technology library, and power intent file (UPF) if available. The PDN is a structure that delivers or distributes power ("PWR" or "VDD") and ground ("GND" or "VSS") across the chip to prevent voltage drops and ensure adequate power delivery to the macros, standard cells, and other elements in the circuit. Creating the PDN may involve creating and/or arranging power rails, decoupling capacitors, interconnects, and straps. Power grid design may take place after the PDN is created. The power grid design includes a grid of metal wires layered across the chip, forming horizontal and vertical tracks, to distribute power uniformly and reduce resistance and inductance. The power grid design may be a subset of the PDN. The power grid design affects the current and resistance (IR) drop across the chip, which can necessitate specific transistor sizes to maintain performance in low-voltage areas. In some implementations, the power planning stage includes power plan floorplanning to define regions for power and GND pins. In these implementations, the PDN design may take place after the initial power floorplanning.

A result or output of the power planning stage is a power plan file, such as a UPF file, which may include detailed power and ground network layout (e.g., the PDN). In some examples, the power plan file may include decoupling capacitor placements, IR drop analysis report(s), power grid verification report(s), and/or the like.

Physical design 110 may also include a physical verification process, sometimes referred to as "sign-off", after transistor synthesis. The physical verification process may involve verifying various aspects of the IC layout 160 via one or more EDA software tools to ensure correct electrical and logical functionality and manufacturability. The verification processes may include, for example, design rule checks (DRC), layout versus schematic (LVS) checks, exclusive OR (XOR) checks, antenna checks, and electrical rule checks (ERC). The tapeout is the final design stage for the IC before being sent for manufacturing. The tapeout is specifically the point at which the graphic for the photomask of the circuit is sent to the fabrication facility 912. The final output of the physical design process is usually a graphic design system (GDSII) or open artwork system interchange standard (OASIS) file, which is used for manufacturing by the foundry 912, along with various report files from the verification and sign-off such as final timing, power, and area reports, sign-off DRC reports, and/or LVS reports.

In various embodiments, resynthesis may occur one or multiple times during logic synthesis 106 and/or during physical design 110. Resynthesis refers to a process of revisiting and optimizing an already synthesized digital circuit design, such as netlist 130, gate-level netlist 108, and/or IC layout 160, to improve performance metrics/parameters, such as timing, area, and/or power consumption. Resynthesis is sometimes used to address bottlenecks or inefficiencies that appear after the initial synthesis and to improve overall circuit performance and/or reduce resource usage. Resynthesis may be performed when timing paths are not meeting required constraints, critical path optimization is needed, power consumption needs reduction, and/or the area needs to be minimized.

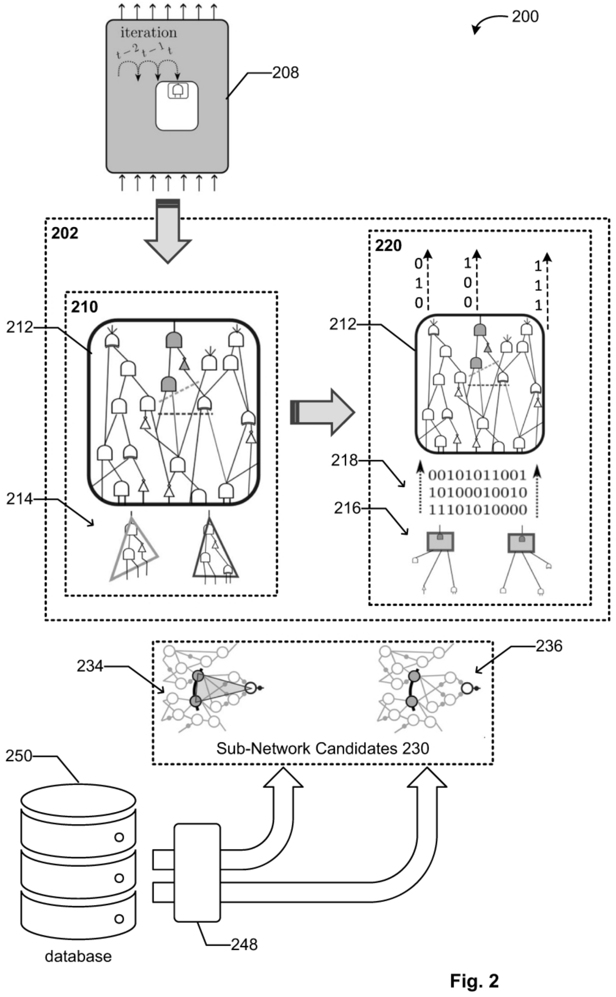

In implementations where resynthesis takes place during logic synthesis 106, resynthesis may take place during or after the initial technology-independent logic optimization. For example, resynthesis may take place during or after the logic optimization stage 126, before technology mapping 132, and/or before generating a gate-level netlist 108. In implementations where resynthesis takes place during logic optimization 126, resynthesis may take place during or after the transistor synthesis stage. In these implementations, resynthesis may be performed when, for example, timing constraints are violated after initial placement, the routing reveals performance bottlenecks, local area constraints need adjustment, and/or the like. Resynthesis that takes place during physical design 110 is sometimes referred to as "incremental optimization" or "physical synthesis". In either implementation, the resynthesis may be performed by the resynthesis system 200 discussed infra with respect to Figs. 2-7.

### 2. Logic Synthesis and Resynthesis Aspects

As mentioned previously, logic synthesis 106 involves transforming a high-level behavioral description, such as RTL description 104, into a gate-level representation, such as gate-level netlist 108, that meets specific design constraints. This process typically includes two stages: front-end optimization, such as logic optimization 126, and backend technology mapping, such as technology mapping 132. The front end optimizes a technology-independent representation. The back end maps this representation to an interconnection of gates, such as gate-level netlist 108, from a given technology library.

Resynthesis is a post-mapping optimization technique, which has gained renewed attention due to complex modern technology libraries. Resynthesis involves applying a set of local transformations to a gate-level netlist, such as netlist 108, after technology mapping 132. While AIG-based optimization was the dominant approach in the last two decades, the increasing complexity of modern technology libraries, with features like multiple-output gates, has renewed interest in resynthesis. Similar to AIG optimization, resynthesis operates at a sufficiently high level of abstraction to enable the use of fast and efficient optimization algorithms while incorporating technology-specific information. This approach has the potential to yield higher correlation with the final PPA of the chip.

PPA is/are the usually used as key metrics used in VLSI design. Glitching is a type of undesired signal transition that can occur due to input imbalances and high switching probabilities. Glitching is a growing concern as it contributes significantly to dynamic power consumption. The impact of glitching varies depending on the gate type. For example, an EXOR gate may be more susceptible to glitching caused by input imbalances compared to an AND gate because changes to any of the inputs may cause outputs to switch. Understanding and mitigating glitching is useful for optimizing the power efficiency of digital circuits.

Traditional resynthesis techniques often focus on area, timing, and power optimization and rely on resubstitution.

This involves isolating a portion of the circuit (a window) and identifying a dependency cut, a set of nodes that can be used as inputs to a sub-network for resynthesizing a target node. If a smaller area can be achieved through resynthesis, the substitution is performed. Modern techniques have evolved to incorporate signature-based resubstitution and structural rewriting, which leverage partial simulations and structural analysis to identify opportunities for optimization. Additionally, existing/traditional resynthesis engines often prioritize a single cost function, limiting their ability to explore trade-offs between performance metrics. This underscores the need for a versatile post-mapping optimizer that can effectively balance multiple objectives.

*2.1. System Level Assumptions*

Given a Boolean function *f,* a library of gates *L,* and a cost function, a goal of combinatorial circuit synthesis is to find a network of gates from *L* that implements *f* while minimizing the cost function. The cost function can be defined in terms of area, delay, power, glitching (or glitch power), or any combination of these metrics and/or one or more other metrics.

The design flow for combinatorial circuit synthesis involves multiple steps, starting from a high-level specification and progressing towards a physical implementation. In the early stages, the design is represented using abstract, technology-independent models, such as Boolean networks. These models are optimized using various techniques, including Boolean transformations during logic synthesis. In the back-end of logic synthesis, the design is mapped to a specific technology library, resulting in a technology-dependent implementation.

To streamline the technology mapping process, a common simplification is to assume load-independent gate delays under the gain-based delay model. This means that each gate has a fixed worst-case delay, regardless of input slew rate or output load. This assumption enables the high runtime efficiency of modern technology mappers. To ensure accurate timing analysis, a subsequent sizing step/stage employs more refined delay models to locally adjust gate sizes.

*2.2. Logic Synthesis and Resynthesis Concepts*

A Boolean network is a directed acyclic graph, where nodes represent logic gates and edges represent wires. A technology-independent representation, such as an AIG, is a Boolean network where nodes have relatively simple functions (e.g., two-input AND gates and/or the like). A mapped network is a Boolean network where each node is a cell from a technology library, with specific attributes like area and delay.

If there is a path from a node $x_i$ to a node *x,* then $x_i$ is in the transitive fan-in (TFI) of *x,* and *x* is in the transitive fan-out (TFO) of $x_i$. Primary inputs (PIs) are nodes without fan-ins, and primary outputs (POs) are nodes without fan-outs.

A structural cut is a subset of nodes within a logic network, such as a netlist or the like, which, when separated from the logic network, can represent a functional subregion, sub-circuit, sub-network, or sub-structure of the design, enabling targeted optimization and replacement of specific circuit sections without altering overall functionality. A structural cut can be defined for any circuit representation. A structural cut $\mathcal{C}$ of a Boolean network is a pair (*x,* $\mathcal{L}$ ), where *x* is a node, and $\mathcal{L}$ is a set of nodes such that every path from a PI to *x* passes through at least one node in $\mathcal{L}$ . In some examples, for each node *v* in $\mathcal{L}$ there is at least one path from a PI to *x* passing through v and not through any other leaf. Thus, a structural cut may identify or represent a sub-circuit. And since a sub-circuit is a Boolean function, then a structural cut may also identify or represent a local function.

A non-structural cut is a subset of nodes in a logic network that does not necessarily follow the original structure but instead forms a functionally cohesive. A dependency cut is a subset of nodes within a logic network that includes all nodes functionally dependent on a particular output. A dependency cut is a subset $\mathcal{C} = (x, \mathcal{L})$ , where $\mathcal{L}$ contains nodes that are not in the TFO of *x* and such that there is a function $f : \mathbb{B}^{|\mathcal{L}|} \to \{0,1,*\}$ realizing x = f( $\mathcal{L}$ ). Dependency cuts are more general than structural cuts. See e.g., Costamagna et al., An Enhanced Resubstitution Algorithm for Area-Oriented Logic Optimization, 2024 IEEE INTERNATIONAL SYMPOSIUM ON CIRCUITS AND SYSTEMS (ISCAS), pp. 1-5 (19 May 2024), incorporated herein by reference.

A simulation signature is a unique pattern or binary sequence generated from the output responses of a logic circuit to a set of input vectors. Simulation signatures may be used to verify functional equivalence and guide optimization decisions. A *p*-bit simulation signature for a node *x* is a Boolean vector approximating the global function of node *x* obtained by simulating the network with a set of *p* bit-level simulation patterns assigned at the PIs.

The arrival time of a node n, $t_n^A$ is the earliest time at which its output can be stable. The required time, $t_n^R$ is the latest time at which the output can be stable without violating timing constraints. The sensing time, $t_n^S$ , is the earliest time at which the output can change. The activity window is the interval $\left[t_n^S, t_n^A\right]$ in which the node can toggle. A toggle may refer to a change in a state of a circuit element or signal, which may be used to measure dynamic activity and/or evaluate power consumption of a circuit or sub-circuit.

Zero-delay switching occurs when a gate's output has a different value at the beginning and at the end of a clock cycle. Glitching refers to additional transitions within the activity window. Dynamic switching is the combination of zero-delay switching and glitching.

*2.3. Peephole Optimization*

Peephole optimization is a logic synthesis technique that improves circuit efficiency by analyzing and optimizing small, localized sections of a design-like looking through a "peephole" at only a few gates or components at a time. Rather than reworking an entire circuit, peephole optimization identifies small, redundant or suboptimal patterns or sub-circuits within a netlist and replaces them with simpler, more efficient alternatives. Thus, peephole optimization relies on the concept that optimizing a circuit locally can result in global optimizations. Peephole optimization works well for fine-tuning designs, as it can incrementally improve the circuit's performance with minimal computational overhead. This method allows designers to refine circuits quickly, making it suitable for iterative optimization in complex digital designs. Common peephole optimization strategies include cut-based rewriting, window-based resubstitution, and simulation-guided resubstitution.

Cut-based rewriting involves identifying cuts in a circuit, extracting the functionality of the cut, and replacing it with a smaller, equivalent circuit.

Window-based resubstitution involves identifying a window of nodes around the target node, simulating the window to determine the function of each node, and then trying to replace the target node with a smaller, equivalent circuit.

Simulation-guided resubstitution is similar to window-based resubstitution, but instead of simulating the entire window, it uses simulation signatures to approximate the function of each node. This can be more efficient, but requires additional verification steps before performing substitution to check that the circuit's functionality is preserved.

*2.4. Lazy Man's Synthesis*

LMS is a logic synthesis approach aimed at reducing computational complexity of netlists by focusing only on the most impactful parts of a circuit design. LMS is a technology-independent optimization strategy that capitalizes on the modular nature of digital circuits. See e.g., Yang et al., Lazy Man's Logic Synthesis, 2012 IEEE/ACM INTERNATIONAL CONFERENCE ON COMPUTER-AIDED DESIGN (ICCAD), San Jose, CA, USA, pp. 597-604 (20 Dec. 2012), the entire disclosure of which is incorporated herein by reference. Instead of optimizing an entire netlist upfront, LMS iteratively refines smaller, high-priority regions, achieving optimizations with less computational effort. These smaller, high-priority regions are sometimes referred to as sub-circuits, sub-networks, sub-structures, and the like.

One observation behind LMS is that netlists are composed of many small sub-circuits that have close to optimum output delay for a certain profile of the input arrival times. LMS extracts these sub-circuits and stores them in a database. Such sub-circuits can then be used during cut rewriting for netlist optimization. By identifying and extracting sub-circuits with specific functionalities from a given netlist, LMS can replace these sub-circuits with more efficient alternatives stored in the database. Thus, LMS enables the reuse of low-cost sub-circuits to improve area, delay, and power. This approach can significantly improve circuit performance without resorting to computationally expensive exact synthesis methods.

LMS prioritizes simplicity and speed over exhaustive exploration, enabling faster synthesis cycles that still capture most of the benefits of a full optimization. By avoiding comprehensive enumeration and focusing on immediate gains, LMS can quickly yield practical improvements in circuit performance. LMS may be useful in scenarios where design time is limited, such as early-stage development or rapid prototyping.

While LMS has shown promise in technology-independent optimization and delay reduction, its potential for broader applications remains to be fully realized. One challenge lies in developing a system that can automatically extract databases of optimized mapped sub-circuits for various metrics, enabling LMS-based resynthesis to be applied across a wider range of optimization goals.

*3. Resynthesis Engine Aspects*

Resynthesis offers a potentially powerful optimization technique to optimize technology-mapped networks. Unlike technology-independent optimization for AIGs, operating on technology-mapped networks allows for manipulation of circuits with more precise technology-dependent information while maintaining efficient algorithms. Aspects of the present technology include a resynthesis system that includes a dynamic database and an enhanced resynthesis engine, which is a versatile framework capable of being adapted to optimize for different cost functions. Aspects of the resynthesis system are discussed infra with respect to Figs. 2-7.

Fig. 2 illustrates an example resynthesis system 200, comprising a resynthesis engine 202, a resynthesis database 250, and a cost analyzer 248. The resynthesis engine 202 of the present technology may be implemented on one or more server computing devices 902, while the database 250 can be deployed using the data storage system 908 shown in Figs. 9-10. Computing devices 904 and 906 may interact with computing devices 902 over network 910. Additionally, the resynthesis engine 202 of the present technology is configured to handle functions with larger supports, allowing enhanced flexibility for identifying optimization opportunities related to cost functions such as delay, power, glitching, among many other metrics.

The resynthesis engine 202 may include one or more optimization engines, also referred to as "optimizers," which are configured to optimize one or more parameters by solving, or attempting to solve, an objective function, such as a loss function, cost function, global optimization algorithm, or global search algorithm. As described in greater detail infra, these cost functions may be stored in database 250 and associated with stored sub-networks or cuts. Additionally, the optimizers may employ a multi-objective approach, which addresses optimization problems involving multiple objectives that can be either minimized or maximized. In certain implementations, the optimizer(s) of the resynthesis engine 202 may be created using commercially available software packages for linear programming, mixed-integer programming, quadratic programming, and similar techniques, or may be developed as proprietary or custom software specifically tailored for resynthesis optimization processes, such as those discussed herein. Additionally or alternatively, aspects of the resynthesis engine 202 may be implemented as part of technology mapping 132 and/or as part of a technology mapper, such as mapping engine 134, to improve the resulting netlists in various design dimensions. In other aspects, the resynthesis engine 202 may be implemented as a stand-alone engine or component.

The resynthesis engine 202 identifies cuts within a netlist, such as a structural cut 214 or a dependency cut 216 in netlist 208, performs look-ups in the database 250 to identify candidate sub-circuits, and resynthesizes the netlist 208 using a sub-circuit if it presents a more favorable cost function value than the existing cut. For instance, upon identifying a dependency cut 216 in netlist 208, which may include structural and/or non-local information, the resynthesis engine 202 extracts or derives a Boolean function for the dependency cut's 216 output. The resynthesis engine 202 then searches the database 250 for precomputed sub-circuits that can implement the extracted Boolean function, or implements the output of the extracted Boolean function. The resynthesis engine 202 then computes respective cost values of the dependency cut 216 and each discovered sub-circuit using cost functions corresponding to each discovered sub-circuit. In some implementations, the cost function of a discovered sub-circuit may be sufficiently non-complex, such that it can be evaluated in or on the database entry, or even precomputed such as in the case of area or timing, before or instead of plugging the sub-circuit into the larger circuit. If the sub-circuit has superior cost efficiency than the dependency cut 216, the resynthesis engine 202 replaces the dependency cut 216 with the selected sub-circuit. This type of evaluation can be advantageous because it is faster than rewriting the entire circuit. In some implementations, the cost function of a discovered sub-circuit may be sufficiently complex, such that the evaluation of the cost function on-the-fly may not be possible, as in the case of simulation-based glitch power metrics. In such cases, the resynthesis engine 202 may rewrite the circuit using each candidate sub-circuit, and evaluate the metric(s) of the entire circuit based on the cost function. If a rewritten circuit demonstrates superior cost efficiency than the circuit with the dependency cut 216, the resynthesis engine 202 replaces the dependency cut 216 with the selected sub-circuit. This process iteratively traverses the netlist 208, replacing cuts until no further cost savings are achievable. These aspects are discussed in more detail infra.

In some aspects, the resynthesis engine 202 operates on a node-by-node basis, performing peephole optimization on technology-mapped networks or netlists. Each node in an unoptimized netlist 208 undergoes structural analysis by a structural analyzer 210 to identify optimization opportunities. The unoptimized netlist 208 may be a gate-level netlist, such as netlist 108. In some implementations, the resynthesis engine 202 accepts inputs in the form of an RTL description 104 (e.g., a Verilog file or other file format) or an AIG with associated mapping parameters. The mapping process may be based on a load-independent gain-based model, which assumes a constant pin-to-pin propagation delay for each cell. This multiple-output mapper model enables efficient algorithms while incorporating some technology-specific information. Although this model may introduce certain limitations, timing violations can be addressed through sizing adjustments post-optimization and/or post-resynthesis. Additionally or alternatively, the resynthesis engine 202 can also work with load-dependent models and can also perform sizing aspects in the optimization rather than relying on traditional sizing methods, post-processing.

The structural analysis by the structural analyzer 210 involves enumerating structural cuts 214, and computing a relatively large structural cut to define a window 212 for resubstitution. In general, a cut is a partition of the vertices in a graph into two disjoint subsets, which essentially cuts or separates the graph into one or more subgraphs. A structural cut 214 is a set of nodes that lie on all paths between PIs and a target node, and the window 212 is a sub-network of netlist 208 where optimization can be applied. Given a target node, the structural analyzer 210 extracts a window 212 within netlist 208 and identifies one or more structural cuts 214 within the window 212. Through structural exploration, the structural analyzer 210 identifies a relatively large structural cut, such as window 212, collects nodes between the target node and the cut's inputs, and expands this set to include additional nodes with all fan-ins contained within it.

The structural analyzer 210 enumerates structural cuts 214 using, for example, one or more classical cut enumeration algorithms used in cut-rewriting. A cut enumeration algorithm is an algorithm used to identify or enumerate all possible cuts in a network or graph. For example, a cut enumeration algorithm may find all possible ways to partition a graph's vertices into at least two non-empty sets, or "cuts," such that there is at least one edge crossing between the sets. Examples of such cut enumeration algorithms may include Ford-Fulkerson algorithm, Edmonds-Karp algorithm, Karger's algorithm, Stoer-Wagner algorithm, K-cut Enumeration, balanced cuts SAT-based cut enumeration, dynamic programming enumeration techniques, and/or the like. After enumerating cuts, a cut-rewriting process may be used to replace redundant or suboptimal cuts or sub-networks within the netlist 208 with optimized sub-networks stored in the database 250, which can potentially improve the overall cost function associated with a netlist 208. Additionally, the cuts can also be added to the database 250 when the cost of a newly enumerated cut outperforms the cost of an existing database entry.

The functional analyzer 220 performs simulations, such as window simulation 218, and analyzes the results to identify and/or extract non-structural cuts and/or dependency cuts 216 suitable for optimization. The functional analyzer 220 complements the structural analysis by considering functional dependencies among nodes.

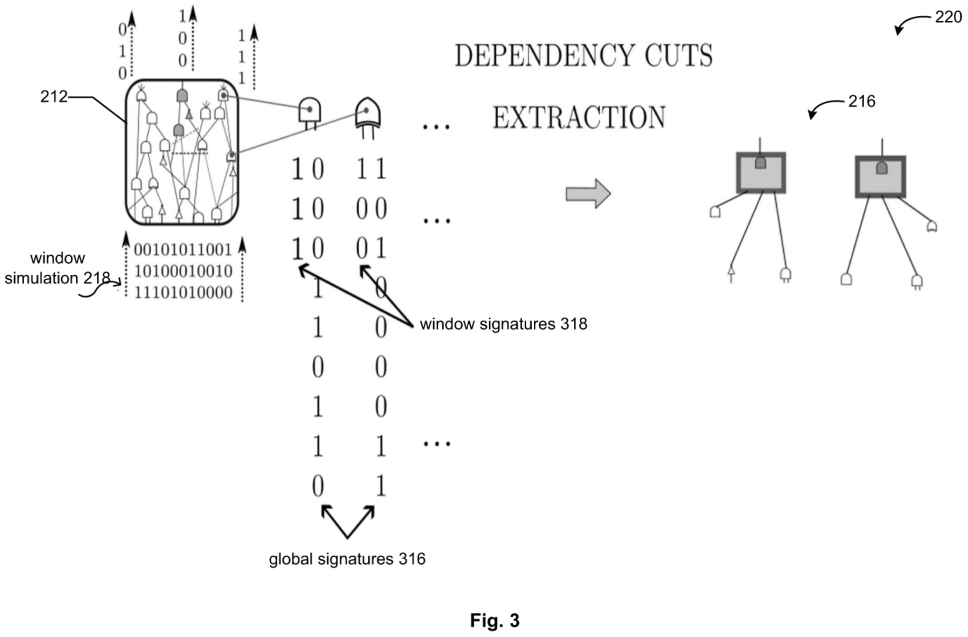

An example functional analyzer flow of functional analyzer 220 is shown by Fig. 3. In the example of Fig. 3, the functional analyzer 220 employs a hybrid approach that combines global simulation signatures 316, computed once and updated as needed, with window signatures 318 derived from exhaustive simulation, such as window simulation 218. While global signatures 316 provide broader information, including potential don't cares, they may not capture all existing don't cares. Window signatures 318, on the other hand, can detect some local don't cares but may not express all global ones.

Beyond simulation and signature manipulation, the functional analyzer 220 extracts dependencies between the target node and one or more other nodes in the network, yielding dependency cuts 216 for optimization. The functional analyzer 220 identifies dependency cuts 216 using sets of pairs of functions to be distinguished (SPFD). This process ultimately yields a set of dependency cuts 216 for the target node, along with the associated cost of the minimum fan-in fan-out cut (MFFC), which represents the sub-network that can be removed from the netlist 212 if the dependency cut 216 is implemented in its place.

In the functional analyzer 220, the nodes within the window 212 are characterized by their functional information, extracted through local and non-local simulation, such as window simulation 218. This information is used for both window-based resynthesis and simulation-guided resynthesis. By applying the theory of sets of pairs of functions to be distinguished, dependency cuts 216 can be derived from the functional information. Thus, the resynthesis engine 202 generates a set of structural cuts 214 and dependency cuts 216, each associated with a specific functionality and a cost, typically measured in terms of area. In some implementations, the functionality and cost may be measured in terms of one or more other metrics or parameters.

Referring back to Fig. 2, the resynthesis engine 202 employs the dynamic database 250 to efficiently explore a wide design space. The dynamic database 250 memorizes or otherwise stores relatively simple sub-structures, cuts, sub-circuits, and/or sub-networks encountered during graph exploration and updates stored information accordingly. This approach allows for efficient resynthesis and supports multiple-output gates, a feature that distinguishes the resynthesis engine 202 of the present technology from conventional resynthesis engines. In some aspects, the dynamic database 250 stores low-cost implementations of frequently encountered functions, which is/are continually updated as more efficient structures are discovered during the optimization process. The dynamic database 250, in contrast to previous methods, supports larger cuts beyond the traditional 4-input limit and can be updated using netlists extracted by the structural analyzer 210. Additionally, an initial database 250 can be constructed and provided to the resynthesis engine 202 as a gate-level netlist, to provide a starting point database for optimization. Alternatively, the resynthesis engine 202 and/or some other algorithm automatically populates an empty database 250 with the structures it encountered in various designs.

In some aspects, each sub-circuit entry in the database 250 may be a supercell or supergate, accessible through a unique key. A key is a field, a combination of fields, unique identifier, or other data used to uniquely identify a record or database entry in the database 250. For example, when database 250 is implemented as a relational database, a primary key may be used to uniquely identify a row within the database 250 for a given sub-circuit. By way of another example, when database 250 is implemented as a non-relational database, a unique identifier may be used to identify a data item that stores a corresponding sub-circuit. By way of yet another example, the database 250 may be implemented as a hash table, where hash function may be used to map a key to a specific location (or bucket) in memory where a corresponding sub-circuit is stored. In either of these examples, the key may be a binary sequence (or binary value) representation of a truth table of the corresponding sub-circuit. This may allow multi-input sub-circuits to be stored in the database 250.

Additionally, some implementations may include multiple databases 250 where, for example, each database 250 stores a different metric. For instance, a first database 250 may store area cost values, a second database 250 may store timing cost values, a third database 250 may store power cost values, a fourth database 250 may store glitching cost values, and so forth. Additionally or alternatively, a value associated with each key can be structured as a dictionary or object that holds relevant metrics for respective sub-circuits. For example, the key represents a unique identifier for the sub-circuit, such as the truth table in binary form, and the value associated with the key may map to a dictionary or object containing various metrics associated with the sub-circuit, such as area, delay, power consumption, glitching, toggle activity, and so forth.

Furthermore, the sub-circuits in the database 250 may be an enumeration arranged or sorted according to their corresponding cost values or cost functions. For example, a list of sub-circuits can be sorted by their area if optimization is being performed for area. Additionally, optimization may be performed using multiple metrics, such as optimizing for area and timing. For example, an optimization heuristic may be formulated that optimizes for area while being within specified timing constraints.

The dynamic database(s) 250 extends the LMS paradigm to post-mapping optimization. By continually updating the database 250 during optimization, the resynthesis engine 202 can identify promising candidates 230 for substitution. The cost analyzer 248, either as an independent component or part of the resynthesis engine 202, evaluates cost for both netlist and database entries, providing metrics for area, delay, switching activity, toggles, glitching, etc., and thus, enables balanced optimization across these metrics.

For example, the structural analyzer 210 and/or the functional analyzer 220 identify potential candidates for optimization, each representing a relatively small Boolean function. The potential optimization candidates identified by the structural analyzer 210 may be structural cuts 214. The potential optimization candidates identified by the functional analyzer 220 may be non-structural cuts and/or dependency cuts 214. The resynthesis engine 202 searches the database 250 for existing implementations of the functions represented by cuts 214, 216 using the structures of the optimization candidates. The database 250 may return a set of sub-networks candidates 230, which are candidates for replacing the cuts 214, 216. By searching the database 250 for existing implementations of the functions and evaluating their expected costs using the cost analyzer 248, the candidates 230 for substitution can be identified. In the example of Fig. 2, sub-network 234 may be a candidate for replacing a structural cut 214 and sub-network 236 may be a candidate for replacing a dependency cut 216. To facilitate efficient evaluation, a cost function is maintained for each database entry in database 250, updating it with the average cost of all replacement attempts. This allows the database entries to be ranked based on their average fitness for optimization.

If any database entries have a lower cost than the extracted cut, they are considered optimization candidates and evaluated against other candidates 230. In the case of structural cuts 214, if the sub-netlist within a structural cut 214 has a lower cost than any database entry or if the number of entries falls below a threshold, the database 250 may be updated to include that structural cut 214. In some implementations, if the database 250 for a function reaches a threshold size, an entry with the smallest average cost is removed to maintain a manageable database size. Otherwise, the new cut is simply appended to the existing entries in the database 250. Additionally or alternatively, the dynamic database 250 may be updated during the optimization process, enabling a more flexible approach than conventional resynthesis approaches. Some aspects include a simulation-guided optimization technique to address the increasing importance of power efficiency. This technique leverages a fast simulator to estimate power consumption, including the impact of glitching, and guides the resynthesis engine 202 toward low-power solutions.

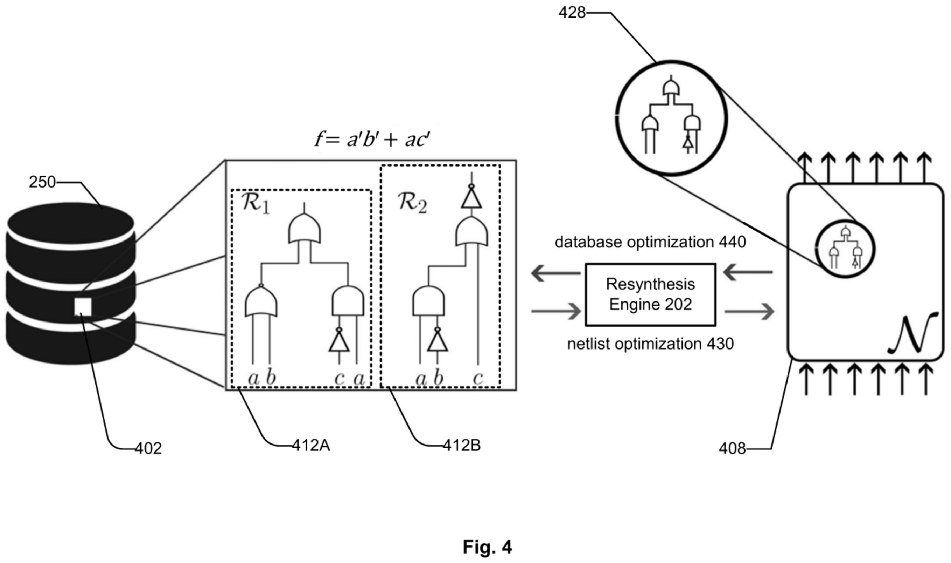

Fig. 4 shows a representation of a database entry 402 storing two netlists for the function $f = a'b' + ac'$. The resynthesis engine 202 uses the database entries 402 to optimize a netlist 408, and sub-network 428 found in the netlist 408 during structural exploration to update the information in the database 250. The netlist 408 may be the same or similar as netlists 124, 130, or 208.

In the example of Fig. 4, for a given Boolean function $f$ there may be two netlists, such as sub-netlists 412A and 412B, stored in the database 250. It should be noted that conventional techniques are only capable of containing one structure for each circuit/sub-net functionality. In this example, sub-netlist 412A may have an associated reward value $\mathcal{R}_1$ and sub-netlist 412B may have an associated reward value $\mathcal{R}_2$. During graph/netlist optimization 430, structural cut enumeration is performed, and a sub-network, such as sub-network 428, may be found implementing the same function as the structural cut enumeration. Hence, the database 250 is searched and the sub-network 428 cost $\mathcal{C}_r$ is evaluated against each database entry cost $\mathcal{C}_e$ by computing a reward $r_e = \mathcal{C}_r - \mathcal{C}_e$. This allows for a comparison-based optimization approach between the sub-network 428 and stored sub-circuits based on their respective costs. In some implementations, three possible reward situations may be defined for computed reward $r_e = \mathcal{C}_r - \mathcal{C}_e$, based on the value of $r$. It should also be noted that there may be multiple reward values, for example, a reward value for area, a reward value for timing, and so forth. In these implementations, a Pareto front of designs may be stored in the database 250. Here, the Pareto front is defined such that improving one dimension makes another dimension worse. The resynthesis engine 202 can then make targeted decisions based on the local requirements of the cost function. For example, in the critical path, the resynthesis engine 202 may choose a supergate or supercell with better timing and worse area to meet the overall timing goals, and outside of the critical path, the resynthesis engine 202 can select slower supergates or supercells that improve area and power.

A first reward situation includes the reward being positive or more than zero $(r_e > 0)$. This means that the database entry 402 has smaller cost value than a cost value associated with the current sub-network 428 (i.e., $\mathcal{C}_r > \mathcal{C}_e$). This indicates that the sub-network 428 has a higher cost than the stored sub-circuit. In this case, replacing the sub-network 428 with the stored sub-circuit is favorable, as it would lower the overall cost of the netlist 408. Therefore, the stored sub-circuit may be a candidate for optimization.

A second reward situation includes the reward being equal to zero $(r_e = 0)$. This means that the database entry 402 has the same cost value as the cost value associated with the current sub-network 428 (i.e., $\mathcal{C}_r = \mathcal{C}_e$). Here, the costs of the current sub-network 428 and stored sub-circuit are equal, indicating no preference between the two options based on cost alone. Other factors may be used to determine whether a replacement should take place or not.

A third reward situation includes the reward being less than zero $(r_e < 0)$. This means that the database entry 402 has higher cost value than the cost value associated with the current sub-network 428 in the netlist 408 (i.e., $\mathcal{C}_r < \mathcal{C}_e$). Here, the sub-network 428 is potentially better than the one currently stored in the database 250. Thus, the sub-network 428 in the netlist 408 is a potential candidate for storage in the database 250 either as a replacement for the current database entry 402 or in addition to the current database entry 402. The replacement of the stored sub-circuit with the sub-network 428 may be part of the database optimization 440.

After evaluating all database entries, or a set of database entries, for a specific function, such as function $f$, a reward function $\mathcal{R}_e$ is updated to track the average performance of each of the database entries. In some implementations, the database 250 maintains a maximum capacity for each function to provide efficient storage. In these implementations, if the sub-network 428 in the netlist 408 exhibits a negative reward value, and the database capacity is not exceeded, the sub-network 428 may be added to the database 250. However, if the capacity is reached, a least promising entry, based on an average reward $\mathcal{R}_e$, is replaced with the new sub-network 428, and its initial reward is set to $-r_e$. Algorithm 1 illustrates an example of how database updates may be integrated into the resynthesis process, in accordance with aspects of the technology.

## Algorithm 1

| **Algorithm 1:** Lazy Man's Resynthesis |
| --- |

**Data:** A mapped circuit $G$, and some specifications $\Sigma$

**Result:** A new mapped circuit optimized for a cost function, under constraints in $\Sigma$.

**for** $n \in G$ **do**

> Build a window;
>
> /* structural exploration */
>
> **for** $\mathcal{C}_s \in \{\mathcal{C}_{s,i}\}_i$ **do**
>
> > $f_\mathcal{C} \leftarrow$ Extract the cut functionality;
> >
> > **for** *entry e in the database with function f* **do**
> >
> > > Compute the reward $r_e = \mathcal{C}_s - \mathcal{C}_e$;
> > >
> > > $\mathcal{R}_e \leftarrow$ update the reward;
> > >
> > > **if** $r_e > 0$ **then**
> > >
> > > > $N_e$ is a candidate for resynthesis;
> > >
> > > **else if** $r_e < 0$ **then**
> > >
> > > > $N_s$ can optimize the database;
>
> /* non-structural exploration */
>
> Enumerate dependency cuts for $n$: $\{\mathcal{C}_{d,j}\}_j$;
>
> $f_\mathcal{C} \leftarrow$ Extract the cut functionality;
>
> **for** *entry e in the database with function $f_\mathcal{C}$* **do**
>
> > Compute the reward $r_e = \mathcal{C}_d - \mathcal{C}_e$;
> >
> > **if** $r_e > 0$ **then**
> >
> > > $N_e$ is a candidate for resynthesis;
> >
> > **if** $\exists r_e > 0$ *and $\Sigma$ met* **then**
> >
> > > $N_e^*$ is the candidate with the highest reward;
> > >
> > > Resynthesize the cut $\mathcal{C}$ with $N_e^*$;

**return** the optimized circuit;

In some examples, Algorithm 1 may be used during database optimization 440. In some implementations, to optimize database storage, netlists may be stored only for *P*-representatives, a set of characteristic functions from which other non-characteristic functions can be derived through input permutations. Initially, the database 250 may include *P*-representatives for all 4-input functions and the most frequently occurring functions in digital benchmarks for 5 and 6 inputs. The support for 5 and 6 input functions also sets the present technology apart from conventional resynthesis engines and techniques, which are typically limited to 4-input functions.

Additionally, symmetry information may be leveraged to further enhance efficiency. For Boolean functions with input variable symmetries, the database 250 may store the symmetric variable pairs and their longest path to the output. This information can then be used for selecting optimal variable orderings based on input arrival times.

The versatility of this formulation allows the resynthesis engine 202 to target various cost functions. For example, to optimize for area, the area of the sub-network may be considered. To optimize for delay, the arrival time at the output node can be evaluated based on the arrival times at the cut's leaves. Additionally, as discussed infra, a simulation-guided cost function may be used to assess dynamic switching in the netlist. This enables power-oriented resynthesis, providing a comprehensive optimization framework. Thus, the database 250 may store information related to transitions at each node in each sub-network, such as switching, toggling, and glitching activity.

For instance, the resynthesis engine 202 may be configured to perform simulation-based optimization. There may be multiple ways to perform simulation-based optimization. Here, a "workload" may be a set of input pairs that are used to toggle a circuit. In a first example, the resynthesis engine 202 may optimize the netlist 208 one sub-network at a time where the resynthesis engine 202 evaluates whether a sub-network is better than another sub-network stored in the database 250. Here, the resynthesis engine 202 may take input pairs or a workload, simulate the network, and obtain toggle information at the inputs for different input arrival time pairs. During optimization when the resynthesis engine 202 re-simulates only the candidate subnetworks 230 from the database 250 that are being considered for replacing a cut from the netlist 208. A full power analysis is performed for only that subnetwork using the input arrival input patterns, which are based on the toggle information, and with relatively precise arrival time information. This power analysis provides a metric that indicates how much the network toggles and the efficiency of the network for the arrival time arrival patterns that were considered. Through this simulation approach, the sub-networks stored in the database 250 can be evaluated based on switching, toggling, and glitching activity as justifying a replacement in the database 250.

In a second example, the resynthesis engine 202 may apply a workload to the entire circuit and measures the total power, such as switching, glitching, and/or so forth. The resynthesis engine 202 finds structural or dependency cuts, and identifies the inputs of the cut under the workload. The resynthesis engine 202 simulates the database entries with the workload that arrives at the cuts in order to determine the reward(s). In a third example, the resynthesis engine 202 may determine cuts, simulates only the cut(s), and evaluates the results against the database entries to determine the reward(s). In a fourth example, the resynthesis engine 202 may run the workload on the entire circuit, and in order to evaluate sub-circuits stored in the database 250, the resynthesis engine 202 may insert the sub-circuits into the entire circuit and re-simulates the entire rewritten circuits.

Referring back to Fig. 2, the resynthesis system 200 includes a cost analyzer 248. Although the example of Fig. 2 shows the cost analyzer 248 outside of the resynthesis engine 202, in some implementations, the cost analyzer 248 may be part of the resynthesis engine 202. The cost analyzer 248 evaluates the cost of sub-networks, enabling the assessment of both existing sub-networks within the netlist 208 and database entries in database 250. The cost analyzer 248 is responsible for evaluating the cost of sub-networks within the netlist 208 and sub-networks stored in database 250. The cost analyzer 248 can be configured to store and update timing information, including arrival times and required times, which are used for delay-oriented optimization and optimizing other metrics under delay constraints. Additionally, the cost analyzer 248 can incorporate power-specific concepts such as sensing times and required times.

The cost analyzer 248 can evaluate the cost of existing sub-networks within the netlist 208 and assess the cost of introducing a sub-network from the database 250 at a specific point. This involves using selected nodes as inputs and replacing a target node with the sub-network's output. The framework of the present technology is flexible, allowing for the inclusion of various cost functions. For instance, area can be evaluated by considering the sub-network's area, while delay can be assessed by propagating arrival times through the candidate sub-network. Thus, in some aspects, each cost function can be evaluated locally using the current network state and potentially leverage the available timing information. Moreover, the cost analyzer 248 can help control other PPA metrics, such as avoiding delay increases, area increases, and cascading effects in the target node's timing.

The optimization algorithm of the present technology is a versatile framework that can be adapted to various cost functions. By defining the cost function, the resynthesis engine 202 can automatically orchestrate structural and dependency cut based optimizations, along with self-updating or constructing one or more databases 250 for arbitrary cost functions. Defining custom cost functions allows the resynthesis engine 202 to leverage structural cuts 214 and dependency cuts 216 for adaptive optimization, automatically managing updates to the database(s) 250 as needed. This approach effectively extends the LMS paradigm to work with any cost function, not just delay-based cost functions. As an example, to define the cost function using the timing information stored in the cost analyzer 248, the following metrics may be considered: item area, delay, and switching activity. The item area involves evaluating the area of the sub-netlist. For database entries, the area may be pre-stored, while for the cut's sub-networks, it can be computed in linear time. The delay involves propagating arrival times through the netlist for database entries and using the pre-stored information for target nodes allows for efficient delay evaluation. The switching activity involves propagating given simulation patterns through the candidate netlist, which enables the extraction of switching activity.

Leveraging the extracted functionalities, the resynthesis engine 202 employs a database-rewriting approach for optimization. Each cut's functionality may be converted into or otherwise act as a key to access corresponding records or database entries in database 250 storing precomputed circuit structures. Each of the structures stored in the database 250 are associated with one or more cost functions. Each cost function may represent one or more metrics. For example, a cost function may represent the area of the gates comprising the stored structure. Additional or alternative metrics and/or parameters can be used to formulate each cost function in other implementations. Each database entry's cost is assessed in real-time, enabling the selection of efficient implementations to improve circuit area and performance. By comparing the cost function with the cost of the original network sub-circuit (extracted earlier), the resynthesis engine 202 can evaluate the potential benefit of replacing the sub-network with a sub-network stored in a database entry in database 250. This cost-benefit analysis guides the selection of a more efficient implementation, leading to potential improvements in area and overall circuit performance.

In contrast to conventional resynthesis techniques, the resynthesis engine 202 of the present technology is extended to address area, delay, power, switching, toggle activity, and/or glitching optimization. This can be achieved by associating multiple netlists with each functionality, increasing the design space exploration and enabling a wider range of optimization possibilities.

### 3.1. Dynamic Switching: Exact Evaluation

To accurately estimate power consumption in digital circuits, aspects of the present technology provide a time-based simulation approach to quantify dynamic switching activity, including the impact of glitches.

In some implementations, this approach divides each clock cycle into smaller time steps, enabling a detailed analysis of signal transitions across the circuit. Here, the number of time steps may be based on the largest activity window in the circuit $\Delta t_{max}$ and the minimum cell propagation delay $d_{min}$ in the library. The number of time steps can be identified or determined by dividing $\Delta t_{max}$ by the minimum propagation delay $d_{min}$. This division allows a fine-grained capture of the timing behavior for the activity window of each node. In other implementations, a clock cycle represents the toggling of the input(s) all the way until the next time the input is toggled. For the purposes of simulation, one toggle is analyzed at a time. Toggling happens at $t = 0$ and then there are T time intervals which are used to simulate the propagation of the input toggle.

Additionally or alternatively, assuming the validity of the load-independent model, a function $\varphi_n^{i,j}(t)$ may be defined to indicate the logic state of node $n$ at time $t$ for input transition $i$ to $j$ ($i \rightarrow j$). This function enables the calculation of node-level switching activity and its contribution to overall power consumption. With this definition, the average switching cost of the circuit, considering that any input transition can happen in the space $\mathbb{B}^{2n} = \mathbb{B}^n \times \mathbb{B}^n$ reads as shown by equation 1.

$$S_n = \frac{1}{2^{2n}} \sum_{(i,j) \in \mathbb{B}^n \times \mathbb{B}^n} \sum_{t=1}^{T} \varphi_n^{i,j}(t) \oplus \varphi_n^{i,j}(t-1) \qquad (1)$$

In equation 1, " $\sum_{t=1}^{T} \varphi_n^{i,j}(t) \oplus \varphi_n^{i,j}(t-1)$ " is the number of switches in a clock period, including glitching and zero-delay switches, while the external (outer) sum averages over all possible pattern pairs at the PIs of the circuit. The period is quantized into $T$ steps.

### 3.2. Dynamic Switching: Estimation

For practical purposes, estimating the exact switching activity of equation 1 may be computationally prohibitive for some network nodes. Therefore, efficient estimation techniques may be developed to integrate a glitching-aware metric into the optimization framework of the present technology. Accordingly, alternative estimation methods simplify equation 1 to yield equation 2.

$$S_n = \sum_{t=t_n^S}^{t_n^A} S_n(t) \qquad\qquad S_n(t) = \langle \varphi_n(t) \oplus \varphi_n(t-1) \rangle_{\mathbb{B}^n \times \mathbb{B}^n} \qquad (2)$$

Equation 2 is based on the fact that a switch can only occur within the activity window $\Delta t_n = [t_n^S, t_n^A]$, and represents the arithmetic mean over the PI transitions with $\langle \cdot \rangle$. Quantizing the activity window rather than the clock period allows for a more fine grained timing evaluation to be achieved.

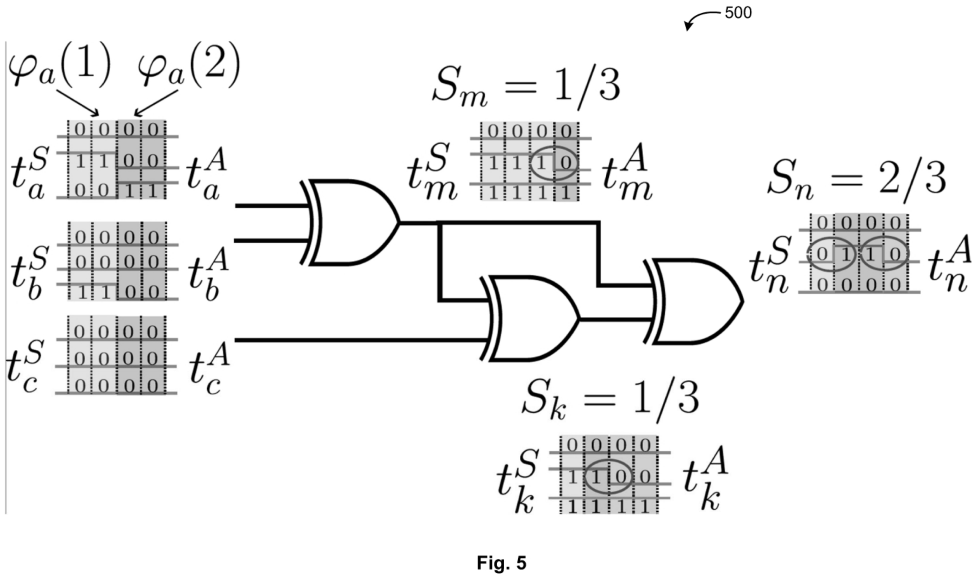

To cope with the impractical size of the number of possible input transitions, a common practice in power estimation is to perform simulation on random workloads $\mathcal{W}^i \subset \mathbb{B}^n \times \mathbb{B}^n$ ($\mathcal{W}^i$ is a subset of $\mathbb{B}^n \times \mathbb{B}^n$). For instance, Fig. 5 illustrates an example of a simulation process on a network using input workload pairs. In Fig. 5, the example simulation process uses the workload at the inputs (*a, b, c*): (0,0,0) → (0,0,0), (1,0,0) → (0,0,0), and (0,1,0) → (1,0,0).

Accurate power estimation necessitates workload information for benchmarking. Currently, there are no existing design-level glitching estimation methods that can function without random workload evaluation.

The load-independent model allows for massively parallel simulation, enabling the exploration of a larger design space compared to traditional approaches. In some aspects, resynthesis may focus on structural and switching contributions to glitching during resynthesis, deferring sizing-related optimizations to later stages in the design flow.

### 3.3. Word-Level Simulation for Dynamic Power Estimation

Fig. 5 illustrates an example word-level dynamic power simulator 500 that enables a detailed analysis of signal transitions. The word-level dynamic power simulator 500 is capable of accurately estimating power consumption in digital circuits by quantifying the dynamic switching activity, including the impact of glitches.

In the example of Fig. 5, each activity window is quantized into $T = 4$ steps. For each node, the simulator 500 stores a Boolean matrix $\varphi \in \mathbb{B}^{W \times T}$, where $W$ is the number of input-pattern pairs in the workload, and T is the number of time-steps, such as the number of time-steps in which activity window $[t_n^S, t_n^A]$ is quantized. In the example of Fig. *5*, $(W, T) = (3,4)$.

The $\varphi_n$ matrices are designed to enable efficient column-wise manipulation. This allows for parallel processing of signal propagation across all input pattern pairs, significantly improving the scalability of operations such as the Boolean difference $\varphi_n(t) \oplus \varphi_n(t-1)$ and pop-count $|\varphi_n(t) \oplus \varphi_n(t-1)|$. These operations, respectively, identify toggling pairs at time t and compute the total number of toggles to estimate $S_n(t)$. From Fig. 5, $S_n(1) = 0$, $S_n(2) = 1$, and $S_n(3) = 1$, which yields the estimator for equation 5 ( $\hat{S} \simeq \frac{2}{3}$ ).

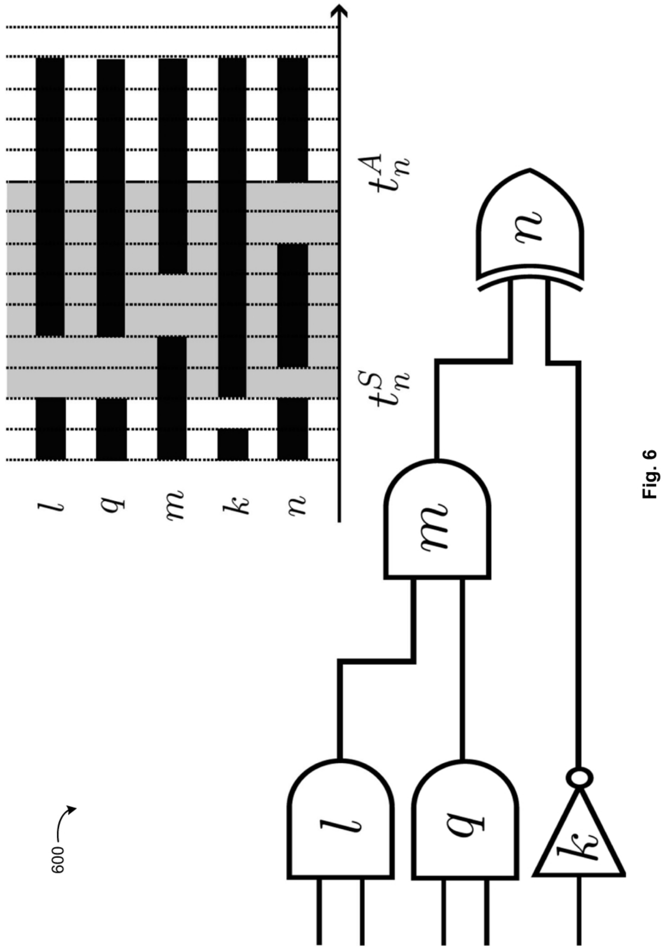

Fig. 6 shows an example network 600 that represents the capability of the algorithm to keep track of the activity-window's partition into smaller intervals due to previous stages, enhancing density estimation accuracy.

In addition to partitioning the activity window and storing simulation matrices, the simulator tracks the specific time intervals within the window where transitions can occur for each node *l, q, k, m,* and *n*. As illustrated in Fig. 6, for node *n,* certain instants within the activity window are excluded from potential transition analysis. This information may provide a more accurate density estimation.

In some examples, when the workload is assumed to be unknown during optimization, using the insight on switching to guide optimization may include identifying an estimation for equation 2. A relatively simple approximation may include estimating the switching density with the switching probability of the gate. For instance, for an EXOR gate this would be $S_n(t) = \mathbb{P}_n^{SW} = 0.5$ uniformly across the activity window. Then, Equation 2 becomes $S_n = \mathbb{P}_n^{SW}(t_n^A - t_n^S)$. Despite the simplicity of this model, the goal is to identify cost functions guiding design space exploration towards minima of the more complex cost function, justifying the adoption of fast to evaluate gradients, that nonetheless approximately point in the right direction in the design space. In this case, minimizing this cost function may tend to reduce the unbalancing by shrinking or closing the activity window, and will prioritize cells with smaller glitching activity for the same unbalancing.

### 3.4. Heuristic Filtering

Heuristic filtering can be used to rapid determine whether a sub-network, such as a cut from a netlist and/or a sub-network stored in a database entry, violates design constraints. This may be beneficial for power-oriented resynthesis, as it avoids the costly propagation of simulation patterns through the database entry.

In some examples, different constraints can be imposed during design-space exploration. Area constraints may be relatively straightforward to impose, as the area impact of each candidate replacement is known. Delay constraints can be effectively managed at multiple levels. To prevent excessive depth increases, the window construction process restricts the divisors to those with arrival times that meet the target's timing requirements. Post-replacement delay violations can be efficiently detected by propagating arrival times through the database entry and verifying compliance with output timing constraints.

Local optimization of switching activity, while considering glitching effects, can be insufficient. Structural modifications may inadvertently worsen timing and increase dynamic power consumption within the TFO. This can occur due to broader node activity windows, increased root node switching, or a combination of both. To mitigate these negative impacts, a heuristic filter may be implemented to prevent the widening of activity windows within the TFO.

In some examples, the desired times of a signal may be defined as shown by equations 3 and 4.

$$t_n^{D,A} = \min_{n_o \in FO(n)} \left( \max_{n_i \in FI(n_o)} \left( t_{n_o}^A - d_{n_i \to n_o} \right) \right) \tag{3}$$

$$t_n^{D,S} = \max_{n_o \in FO(n)} \left( \min_{n_i \in FI(n_o)} \left( t_{n_o}^S - d_{n_i \to n_o} \right) \right) \tag{4}$$

The desired arrival (sensing) time of a database entry's output is the maximum (minimum) arrival (sensing) time that can be taken by the node without increasing the activity window of any fanout node during resynthesis.

Given the switching estimates $S_{\{r\}}$ and $S_{\{n\}}$ for the root's sub-network and new nodes's one, and their corresponding arrival and sensing times, the substitution is accepted if the following conditions are valid: 1) $S_{\{n\}} \leq S_{\{r\}}$; 2) $t_n^A \leq t_r^{D,A}$; and 3) $t_n^S \geq t_r^{D,S}$. If all conditions are met, the replacement is considered legal, as it does not negatively impact the activity windows of immediate fanout nodes and, assuming accurate switching density estimation, minimizes the introduction of new glitches within the TFO.

*3.5. Switching Density Estimation*

In some aspects, three switching cost estimates may be defined, which involve progressively higher effort for their evaluation.

The first cost function relies on the observation that dynamic power contains zero-delay switching, and that this component requires much lower effort simulation to be evaluated. Under the assumption that glitching is proportional to the zero-delay switching of the cells, the dynamic power can be estimated as shown by equation 5.

$$\hat{S}_n = \hat{S}_n|_{0-del} + \hat{S}_n|_{glitch} \simeq \eta \hat{S}_n|_{0-del} \tag{5}$$

Using this cost corresponds to traditional power-optimization, with the addition of the heuristic filtering introducing glitching awareness through balancing-information.

The second approach is an approximation of equation 1, which involves propagating simulations through the database entry from its leaf nodes. This method, coupled with heuristic filtering based on desired times, maximizes the potential for dynamic power reduction within the given workload. However, to mitigate overfitting, it is advisable to validate the results against additional workloads.

The third approach involves Monte-Carlo sampling of a window. The problem with workload-based optimization is that for nodes deep in the network, their TFI contains many PIs, making it difficult to quantify the capability of the workload in properly sampling this large Boolean space. On the contrary, the interval computation described in Fig. 6 is workload independent, and the glitching rate at a node can be at least used as a reference for quantifying how many toggles that may be expected on average at a node. Since the problem with workload-dependence is the undersampling of large spaces, one can rely on the fact that the resynthesis engine relies on windowing. For example, let $\mathcal{C} = (x, \mathcal{L})$ represent a window's cut, $\{\mathcal{I}_l\}_{l \in \mathcal{L}}$, represent the collection of its leaves' intervals, and $\{\hat{S}_l\}_{l \in \mathcal{L}}$ represent the estimate of the leaves' dynamic switching based on the workload. Additionally, let $X_l$ be the random variable, which may be expressed by equation 6.

$$X_l = \begin{cases} [\hat{S}_l] + 1 & \text{w.p. } \{\hat{S}_l\} \\ [\hat{S}_l] & \text{otherwise} \end{cases} \tag{6}$$

In equation 6, $[S]$ and $\{S\}$ are the integer part and the mantissa of a number, respectively. In this way, $\langle X_l \rangle = \hat{S}_l$. Sampling values for $X_l$ can identify or determine the number of toggles that should happen for each input-pair of the local workload. These toggles are performed at time steps sampled uniformly at random from the activity intervals. Additionally or alternatively, these toggles are then randomly distributed across the activity intervals.

*3.6. Design-Space Exploration*

The present technology enables flexible design-space exploration by adjusting optimization parameters based on design objectives, facilitating database-based optimization while maintaining constraints on other metrics. One advantage of the framework of the present technology is that, by simply changing the optimization parameters, it is possible to guide optimization based on the current design-space region. In practice, this means that by simply setting the specifications of the algorithm, the algorithm may automatically perform database-based optimization, such as database optimization 440 in Fig. 4, prioritizing the metric under investigation, while guaranteeing the satisfaction of the design constraints on the other metrics.

Design space exploration may be used for workload independent optimization, for which the switching, even when considering glitching, cannot account for all the contribution to power, that further comprise transistor switching. This latter contribution can be addressed through area-oriented optimization, further motivating the need for effectively orchestrate the different metrics.

Algorithm 2 illustrates one such flow, which involves delay, area, and switching optimization, followed by glitching evaluation in the circuit. When no optimization is achieved, the process jumps to a different point of the design space by un-mapping the network to AIG and re-mapping it to technology, which may be similar to the flow for technology-independent optimization.

<div align="center">

**Algorithm 2**

</div>

---

**Algorithm 2:** Design Space Exploration

---

**Data:** A mapped circuit $G$

**Result:** A new mapped circuit optimized for power.

**For** $it < \#iterations$ **do**

    Optimize $G$ for delay under area constraints;

    Optimize $G$ for area under delay constraints;

    Optimize $G$ for switching under area constraints;

    $C \leftarrow$ Evaluate dynamic switching;

    **If** $C$ *not improved* **then**

        Unmap $G$ to AIG;

        AIG balancing;

        Map the AIG;

**Return** the optimized circuit;

---

*3.7. Machine Learning Aspects*

The present technology supports using ML models for learning optimization metrics that may be difficult to capture with heuristics, such as glitch power. This may be useful in cases such as glitch power optimization, where it is difficult to manually define a cell-level metric, but where there is a plethora of glitch power simulation data that can be used to train a cell-level glitch power ML model. Since arbitrary optimization metrics can be used with the resynthesis approach, learned ML optimization metrics can be used to determine and/or select sub-network replacements as discussed previously. In these implementations, an ML model can be trained using simulation data to learn metrics to be optimized for stored sub-networks, providing informed replacement candidates 230 for such metrics.

For example, glitches at a given cell may create glitches at one or more downstream cells. However, it may be inefficient, in terms of time and resource consumption, to re-simulate an entire circuit just to make sure that a replacement sub-network from the database 250 works properly when implemented in a given netlist 208. As discussed previously, local heuristics may be developed based on the information that is locally available to in a given cut, such as input and output characteristics, which are then used to evaluate the cut and the replacement sub-network from the database 250 according to the corresponding cost function. However, it can be difficult to develop or formulate heuristic models for some metrics, such as glitch power. Therefore, an ML model can be developed to learn such metrics for the stored sub-networks for possible replacements.

Any suitable ML model or algorithm can be used to implement the ML optimization metric model discussed previously. As examples, the ML model can be a neural network, such as convolutional neural network (CNN), an attention network, or a graph neural network (GNN). The GNN may be a graph attention network, graph convolutional network, and/or graph sequence neural network. Other types of neural networks and/or other ML models/algorithms suited for circuit resynthesis optimization can be used in other implementations.

*3.8. Annealing Resynthesis Aspects*

Additional aspects of the present technology encompass stochastic, annealing-based resynthesis, wherein iterative optimizations are applied across multiple dimensions, such as area, power, timing/delay, and glitching power, etc., by resynthesizing the circuit structure iteratively and/or stochastically. This process is similar to SA within AIGs, allowing the resynthesis system 200 to anneal by adjusting metrics across these dimensions in a probabilistic manner. For instance, the resynthesis system 200 may focus sequentially on optimizing for different metrics. For example, the resynthesis process may first resynthesize to optimize area, then resynthesize to optimize timing or delay characteristic, then resynthesize to optimize for power characteristics, then resynthesize to optimize for glitching, and then resynthesize to optimize area again.

In these ways, the annealing resynthesis aspects may explore a broader design space and mitigate structural biases inherent in the original netlist 208. This stochastic approach to resynthesis facilitates navigation across multi-dimensional optimization landscapes, guided by a complex objective function, such as a multi-objective function, to balance optimization of multiple metrics. For example, the annealing resynthesis aspects may ensure that improving one metric causes little to no adverse impacts on one or more other metrics, such as optimizing area efficiency while preserving timing performance.

The annealing resynthesis aspects may also operate along a Pareto front, identifying nondominated solutions across various optimization dimensions, thereby allowing for balanced trade-offs and ensuring optimality across multiple objectives without predefined trade-offs among metrics. It should be noted that in some implementations, genetic algorithms, reinforcement learning, and/or other optimization techniques can be used for the resynthesis process.

*4. Experiments*

An experiment was performed to evaluate the versatility of the resynthesis engine 202 by comparing it to state-of-the-art methods. In the experiment, the input netlist was generated using the open-source mapper in Mockturtle to ensure support for multiple-output cells. The experiment first demonstrates the benefits of the LMS paradigm for post-mapping optimization, comparing the performance of resynthesis engine 202 in terms of delay and area under various constraints. Next, the experiment focuses on glitching optimization using peephole optimization techniques to minimize dynamic power. Finally, the experiment showcased the flexibility of resynthesis engine 202 by evaluating an optimization flow that combines delay, area, and power objectives to achieve workload-independent dynamic-power minimization.

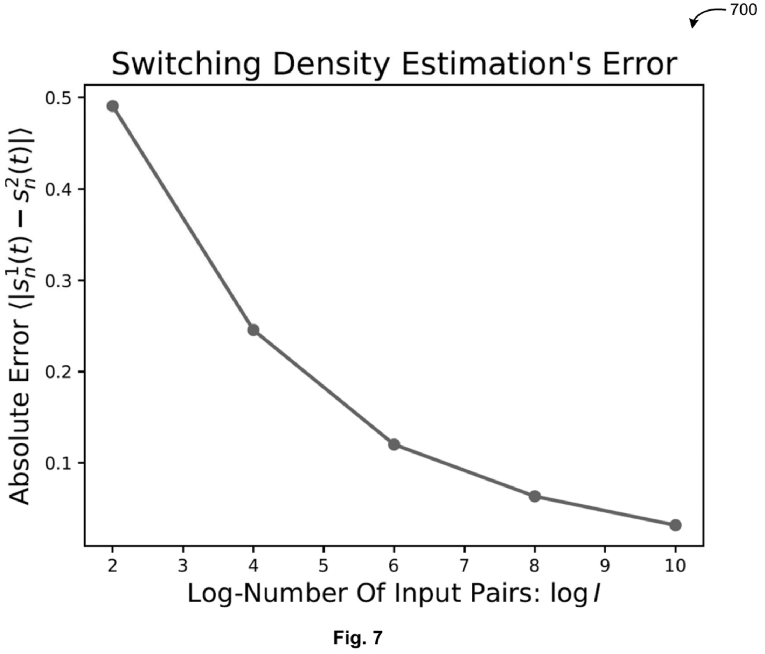

Fig. 7 includes a graph 700 showing an evaluation of the absolute error of the switching rate estimated with two different workloads. The x-axis of graph 700 is in logarithmic scale, showing the average absolute error for $2^2$, $2^4$, $2^6$, $2^8$, and $2^{10}$. The y-axis of graph 700 is the absolute error of the switching rate. Fig. 7 shows the improvement of the glitching estimation at each node by increasing the number of input pattern pairs from $2^2$ to $2^{10}$.

The experiments demonstrate that the resynthesis engine 202 is capable of optimizing circuits after technology mapping for various objectives, including area, delay, and dynamic power. By applying the LMS paradigm, the experiments demonstrate its effectiveness in post-mapping optimization, particularly for glitching reduction in arithmetic circuits. The experimental results show significant improvements in both workload-dependent and workload-independent settings, with up to 17.18% reduction in glitching and 8.91% reduction in total switching. These findings contribute to the development of more energy-efficient systems and open up avenues for further research in post-mapping optimization techniques.

*5. Example Methods*

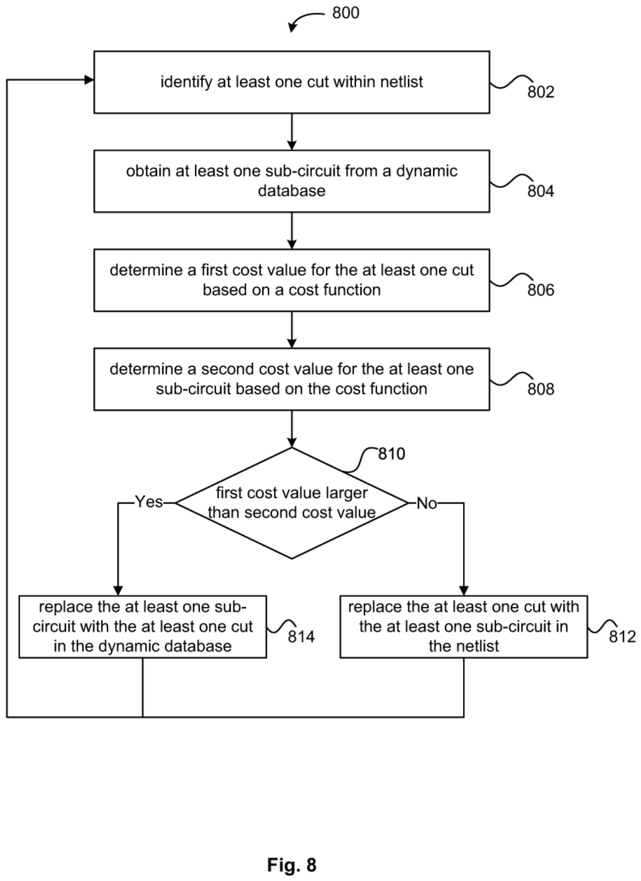

Fig. 8 shows an example resynthesis optimization process 800, which may be performed by a resynthesis engine, such as resynthesis engine 202, using a suitable EDA tool operated by a computing device, such as any of the computing systems 902, 904, 906 of Figs. 9-10.

Process 800 begins at operation 802 where the resynthesis engine 202 identifies at least one cut within a netlist, such as a structural cut 214 or dependency cut 216 within netlist 208 or 408. At operation 804, the resynthesis engine 202 obtains at least one sub-circuit from a dynamic database, such as sub-circuit 412 stored in database entry 402 in database 250. The at least one sub-circuit may be a sub-circuit that performs a same function as the at least one cut.

At operation 806, the resynthesis engine 202 determines a first cost value for the at least one cut based on a cost function. At operation 808, the resynthesis engine 202 determines a second cost value for the at least one sub-circuit based on the cost function.

At operation 810, the resynthesis engine 202 determines whether the first cost value is larger than the second cost value. If at operation 810 the first cost value is larger than the second cost value, the resynthesis engine 202 proceeds to operation 812 to replace the at least one cut with the at least one sub-circuit in the netlist. If at operation 810 the second cost value is larger than the first cost value, the resynthesis engine 202 proceeds to operation 814 to replace the at least one sub-circuit with the at least one cut in the dynamic database when. After performing operation 812 or 814, the resynthesis engine 202 proceeds back to operation 802 to identify another cut within the netlist.

*6. Example System*

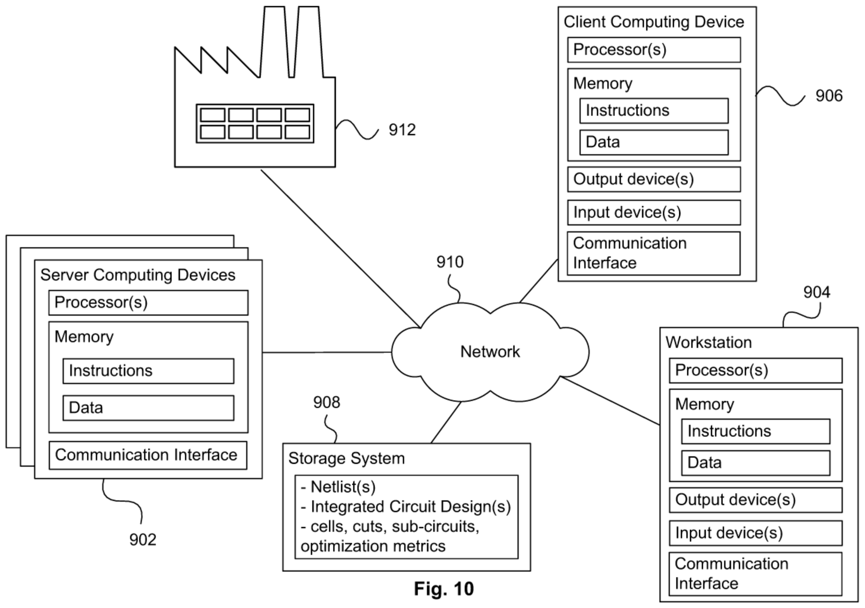

Figs. 9-10 depict an example of a system 900 configured to implement the technology discussed herein. In particular, Fig. 9 is a block diagram and Fig. 10 is a functional diagram, of an example system 900 that includes a plurality of computing devices 902, 904, 906 and a storage system (e.g., one or more databases) 908 connected via a network 910. System 900 may also include a fabrication facility 912 (also referred to as "fab 912") that is configured to produce circuitry designed according to the processes described herein.

Computing device(s) 902 may represent one or more servers and/or other physical and/or virtual computing device(s) that provide access to a pool of physical and/or virtual resources, data, services, and/or programs to other computer device(s), such as computer device(s) 904 and/or 906, over a network, such as network 910. The server(s) 902 may be implemented as web servers, application servers, email servers, file and/or storage servers, and/or run virtual machines (VMs), containers, applications, and/or other executable code. The various servers 902 discussed herein can be embodied as rack servers, tower servers, blade servers, microservers, converged infrastructure, hyper-converged infrastructure (HCI), edge servers, and/or the like. The servers 902 may represent a cluster of servers, a load balanced server farm, a cloud computing service/architecture, an edge computing network/architecture, and/or other grouping or pool of servers, which may be located in one or more datacenters and/or other sites. Additionally, the servers 902 may be interconnected with one another using any suitable networking and/or interconnection technologies, such as Ethernet, fiber channel, data center interconnect, virtual extensible LAN, InfiniBand, switch fabrics, and/or the like.

In some examples, computing devices 902 may exchange information with different network nodes for the purpose of receiving, processing, and transmitting the data to and from other computing devices. Here, the server(s) 902 may handle requests from clients such as computing devices 904, 906 and/or fab 912 (or computing devices therein), processes the requests, and returns appropriate responses via the network 910. In this regard, the server(s) 902 may provide one or more services to one or more clients. Such services may communicate with each other and/or with one or more of computing devices 904, 906 and/or fab 912 (or computing devices therein) via one or more software interfaces, such as application programming interfaces (APIs), application binary interfaces (ABIs), remote procedure calls (RPCs), and/or other interfaces.

In the example of Figs. 9-10, computing device 904 is depicted as a workstation and computing device(s) 906 is depicted as a laptop. However, the client devices 904, 906 could be other types of user devices, such as smartphones, tablet computers, desktop computers, wearable devices, video game consoles, networked appliances, drones, robots, single-board computers, plug computers or dongles, and/or any type of computing devices. Additionally or alternatively, the computing devices 902, 904, 906 may be implemented as part of fab 912 and/or any other system discussed herein.

Fab 912 may be a foundry, factory, manufacturing plant, or other location where semiconductor device fabrication takes place to produce semiconductor structures, such as integrated circuits and the like. For example, fab 912 may include various types of fabrication equipment, robots, computing systems, and/or other systems/devices configured to perform photolithographic and physico-chemical processes during which semiconductor devices are created on a wafer using various semiconducting material(s). Such semiconductor manufacturing processes may include (not in any particular order), for example, wafer preparation (e.g., ingot growth, wafer slicing, wafer cleaning, wafer polishing, etc.), oxidation, photolithography (e.g., photoresist application, mask alignment, UV light exposure, etc.), etching (e.g., wet chemical etching, dry etching, mechanical grinding, chemical mechanical planarization (CMP), etc.), ion implantation or doping, annealing (e.g., spike annealing, drive-in annealing, etc.), deposition (e.g., atomic layer deposition, molecular layer deposition, chemical vapor deposition, physical vapor deposition, conformal film deposition, etc.), planarization (e.g., CMP, etc.), metal layer deposition and patterning, passivation, die preparation, IC packaging, IC testing, and/or other processes. Additional or alternative PCB and/or semiconductor manufacturing techniques may be used, such as silk-screen printing, photoengraving, PCB milling, laser resist ablation, laser etching, plasma exposure, thermal treatments (e.g., rapid thermal processing (RTP), furnace annealing, laser annealing, thermal oxidation, etc.), plasma ashing, epitaxy, and/or the like.

As shown in Fig. 10, each of the computing devices 902, 904, and 906 may include one or more processors, memory, data and instructions. Some or all of the computing devices 902, 904, and 906 may also include communication interfaces, output device(s), and/or input device(s).

The one or more processors may include one or more general-purpose processors, which may be processor(s) designed to perform a wide variety of tasks and/or processor(s) capable of running a broad range of applications and programs efficiently. Additionally or alternatively, the one or more processors may include one or more special-purpose processors, which may be processor(s) designed to perform specific tasks or functions with relatively high efficiency and/or processor(s) optimized for particular applications or workloads. By way of example, the one or more processors may include any number and/or combination of: central processing units (CPUs), graphical processing units (GPUs), accelerated processing units (APUs), microcontrollers, neural processing units (NPUs), tensor processing units (TPUs), hardware accelerators, p-bit devices, application-specific integrated circuits (ASICs), field-programmable gate arrays (FPGAs), digital signal processors (DSPs), network processors, data processing units (DPUs), quantum processing units (QPUs), crypto-processors, programmable logic devices (PLDs), and/or any other hardware-based processor. References to a processor or processor(s) should be understood to include references to a single processor or a collection of processors that may or may not operate in parallel.

The memory for each computing device stores information accessible by the one or more processors, including instructions and data that may be executed or otherwise used by the processor(s). The memory may be of any type capable of storing information accessible by the processor, including a computing device or computer-readable medium, or other medium that stores data that may be read with the aid of an electronic device, such as random access memory (RAM), read-only memory (ROM), non-volatile RAM (NVRAM), flash memory, solid-state storage, memory cards, magnetic disk storage mediums, optical storage mediums such as CDs and DVDs, as well as other write-capable and read-only memories. Systems and methods may include different combinations of the foregoing, whereby different portions of the instructions and data are stored on different types of media.

The instructions may be any set of instructions to be executed directly (such as machine code) or indirectly (such as scripts) by the processor. For example, the instructions may be stored as computing device code on the computing device-readable medium. In that regard, the terms "instructions" and "programs" may be used interchangeably herein. The instructions may be stored in object code format for direct processing by the processor, or in any other computing device language including scripts or collections of independent source code modules that are interpreted on demand or compiled in advance. The instructions may be stored in additional or alternative formats. The flows shown by Fig. 1, and the process shown by Figs. 7 and 9, illustrate examples of algorithms that may be implemented according to such instructions or programs.

The data may be retrieved, stored or modified by one or more processors in accordance with the instructions. The data may also be formatted in any computing device-readable format. For instance, although the claimed subject matter is not limited by any particular data structure, the data may be stored in computing device registers, in relational and/or non-relational databases having a plurality of different fields and records, electronic documents (e.g., HTML, XML, JSON, Protobufs, etc.) or flat files, HDL information, GDSII information, and/or the like. The data may also be formatted and/or stored in any computing device-readable format.

The computing devices may also include a communication system having one or more wired or wireless connections to facilitate communication with other computing devices of system 900 and/or the fabrication facility 912. The communication interfaces may include interconnection or network interface controllers, components, or other suitable devices to communicate with one or more peripheral devices such as input and/or output device(s), one or more databases such as database(s) 908, and/or network nodes via one or more networks such as network 910. For example, the communication interfaces may include wired communication components (e.g., for coupling via USB, Ethernet, fiber optics, and/or the like), cellular communication components, wireless local area network (WLAN), short range communication components, NFC components, and other communication components. It should be noted that the computing devices 902 may also be connected to network 910 and/or to one another via an external communication interface, such as a switch fabric, gateway node, and/or the like.

The computing devices may include all of the components normally used in connection with a computing device such as the processor and memory described above as well as a user interface having one or more input devices (e.g., one or more of a button, mouse, keyboard, touch screen, touch pad, gesture input, dial, switch, microphone, sensors such as sensors including cameras and the like, etc.), various output devices (e.g., electronic display having a screen or projector, speakers, actuators or haptic feedback devices, etc.), and/or other devices/components to enable user interaction with the computing devices.

The various computing devices may communicate directly or indirectly via one or more networks, such as network 910. The network 910 and any intervening nodes may include various configurations and protocols including wired protocols (e.g., Ethernet, etc.), fiber optics networks, cellular communication protocols (e.g., 3GPP) LTE, 3GPP 5G/NR, WiMAX, GSM, etc.), WLAN communication protocols (e.g., WiFi®, Infrared Data Association (IrDA), P2P, etc.), short range communication protocols (e.g., Bluetooth™, WiFi-direct, Miracast, ANT+, Z-Wave, Zigbee®, etc.), the Internet (e.g., including HTTP, TCP/IP, and/or other Open Systems Interconnection (OSI) layer protocols), intranets, enterprise networks, virtual private networks, wide area networks, local networks, private networks using communication protocols proprietary to one or more companies, and various combinations of the foregoing. Such communication may be facilitated by any device capable of transmitting data to and from other computing devices, such as modems and wireless interfaces.

The computing devices may be configured to implement the logic synthesis optimization techniques discussed herein. In some examples, client computing device 904 may be an engineering workstation used by a developer to perform circuit design and/or other processes for integrated circuit design and fabrication. Client computing device 906 may also be used by a developer, for instance to prepare system requirements for the integrated circuit or manage the manufacturing process with the fabrication facility 912. Servers 902 may also be used via the client devices 904, 906 to perform EDM processes, such as EDM flow 100 of Fig. 1, including tasks/operations of one or more of front-end design flow 102, logic synthesis 105, and/or physical design flow 110, including the DC-based transistor netlist optimization process(es) discussed herein. For example, one or more servers 902 (or individual virtual machines or containers running on the server(s) 902) may, based on commands/instructions from a client device 904 and/or 906, operate the resynthesis engine 202 of Figs. 2-7 and/or the resynthesis process 800 of Fig. 8 to optimize a gate-level netlist, such as netlist 108, as part of a resynthesis stage during the logic synthesis 106 and/or during the physical design flow 110. The resynthesized netlist may then be used as a basis for fabricating ICs at the fab 912 based on, for example IC layout 160.

Storage system 908 can be of any type of computerized storage capable of storing information accessible by the server computing devices 902, 904 and/or 906, such as a hard-drive, memory card, ROM, RAM, DVD, CD-ROM, flash drive and/or tape drive. In addition, storage system 908 may include a distributed storage system where data is stored on a plurality of different storage devices which may be physically located at the same or different geographic locations. Storage system 908 may be connected to the computing devices via the network 910 as shown in Figs. 9-10, and/or may be directly connected to or incorporated into any of the computing devices. Storage system 908 may store various types of information. For instance, the storage system 908 may store one or more optimization algorithms, ground-truth datasets, trained ML models, AIGs, netlists, IC designs and/or layouts, and/or other IC-related data. Alternatively or additionally, storage system 908 may store the any final circuitry designs that may be provided for circuit fabrication by facility 912.

## 7. Further Remarks

For the purposes of the present disclosure, the singular forms "a," "an" and "the" are intended to include plural forms as well, unless the context clearly indicates otherwise. The terms "comprises" and/or "comprising," when used herein, specify the presence of stated features, integers, steps, operations, elements, and/or components, but do not preclude the presence or addition of one or more other features, integers, steps, operations, elements, components, and/or groups and/or combinations thereof. Additionally, the phrase "A and/or B" means (A), (B), or (A and B), and the phrase "A, B, and/or C" means (A), (B), (C), (A and B), (A and C), (B and C), or (A, B and C). The phrase "X(s)" means one or more X, a set of X, or a plurality of X. As used herein, the term "each" refers to each member of a set or each member of a subset of a set. The phrases "in an embodiment," "In some embodiments," "in one implementation," "In some implementations," "in some examples", and other similar phrases used herein may refer to one or more of the same or different embodiments, implementations, and/or examples. Furthermore, the terms "comprising," "including," "having," and the like, as used with respect to the present.

Reference to "one or more processors" herein includes situations where a set of processors may be configured to perform one or more operations. Any combination of such a set of processors may perform individual operations or a group of operations, in series and/or in parallel. This may include two or more CPUs, GPUs, TPUs, NPUs, QPUs, ASICs, FPGAs, DSPs, PLDs (or other hardware-based processing elements), or any combination thereof. It may also include situations where the processors have multiple processing cores. Therefore, reference to "one or more" such devices do not require that all processing elements (or cores) in the set must each perform all of the operations. Rather, unless expressly stated, any one of the one or more processing elements (or cores) may perform different operations when a set of operations is indicated, and different processing elements (or cores) may perform specific operations, either sequentially or in parallel.

References to "optimization" herein includes a situation, act, process, or methodology of making something (e.g., a design, system, decision, etc.) as efficient, functional, or effective as possible. Additionally, references to "optimal" herein may include a desirable or satisfactory end, outcome, or output. Moreover, references to an "optimum" herein may refer to the amount or degree of something that is favorable to some end and/or an extrema (maximum or minimum) point of the objective function.

Unless otherwise specifically noted, articles depicted in the drawings are not necessarily drawn to scale. In the appended drawings, which are not necessarily drawn to scale, like numerals may describe similar components in different views. Like numerals having different letter suffixes may represent different instances of similar components.

Although the technology herein has been described with reference to particular embodiments and configurations, it is to be understood that these are merely illustrative of the principles and applications of the present technology. It is therefore to be understood that numerous modifications may be made to the illustrative embodiments and that other arrangements may be devised without departing from the spirit and scope of the present technology as defined by the appended claims. By way of example only, components that are illustrated as being arranged in series may have a complementary configuration in parallel; similarly, components that are illustrated as being arranged in parallel may have a complementary configuration in series.

## Claims

1. A computer-implemented method of resynthesis, the method comprising:

    identifying, by at least one processor, at least one cut within a netlist;
    obtaining, by the at least one processor, at least one sub-circuit from a dynamic database, wherein the at least one sub-circuit performs a same function as the at least one cut;
determining, by the at least one processor, a first cost value for the at least one cut based on a cost function;
determining, by the at least one processor, a second cost value for the at least one sub-circuit based on the cost function;
replacing, by the at least one processor, the at least one cut with the at least one sub-circuit in the netlist when the first cost value is larger than the second cost value; and
replacing, by the at least one processor, the at least one sub-circuit with the at least one cut in the dynamic database when the second cost value is larger than the first cost value.

2. The method of claim 1, wherein the cut is a supercell comprising a combination of multiple cells from a standard cell library.

3. The method of claim 2, wherein the supercell includes at least one cell that is a multi-output cell.

4. The method of any one of claims 1 to 3, wherein identifying the at least one cut within the netlist comprises:

a) extracting a sub-network of nodes within the netlist based on a target node; and identifying the at least one cut within a window;
and optionally:
b) identifying a set of nodes between the target node and inputs to the at least one cut; and expanding the set of nodes to include additional nodes with fan-ins contained within the set of nodes.

5. The method of any one of claims 1 to 4, wherein identifying the at least one cut within the netlist comprises: performing a window simulation to identify a dependency cut as the at least one cut.

6. The method of any one of claims 1 to 5, wherein determining the first cost value for the at least one cut comprises: operating a multi-objective function that optimizes at least one of metric selected from a group comprising area, timing, power, toggle activity, or glitching.

7. The method of any one of claims 1 to 6, wherein the dynamic database comprises respective keys for corresponding stored sub-circuits, wherein each of the respective keys is based on a truth table of the corresponding stored sub-circuits, wherein obtaining the at least one sub-circuit from the dynamic database comprises:

generating a key based on a binary representation of a truth table of the at least one cut; and
querying the dynamic database using the key to obtain the at least one sub-circuit.

8. The method of any one of claims 1 to 7, wherein the cost function includes an evaluation of dynamic switching activity within the netlist.

9. The method of any one of claims 1 to 8, further comprising:

determining, using heuristic filtering, whether substituting the at least one cut with the at least one sub-circuit violates at least one design constraint of the netlist;
and/or
performing design-space exploration by dynamically adjusting one or more optimization parameters toward minimizing a specified metric;
and/or
operating a machine learning model to learn a performance metric to be used for evaluating the first cost value and the second cost value.

10. A computing system, comprising:

at least one memory device configured to store instructions for performing resynthesis during electronic design automation; and
at least one processor connected to the at least one memory device, wherein the at least one processor is configured to execute the instructions to:

identify at least one cut within a netlist;

obtain at least one sub-circuit from a dynamic database, wherein the at least one sub-circuit performs a same function as the at least one cut;

determine a first cost value for the at least one cut based on a cost function;

determine a second cost value for the at least one sub-circuit based on the cost function;

replace the at least one cut with the at least one sub-circuit in the netlist when the first cost value is larger than the second cost value; and

replace the at least one sub-circuit with the at least one cut in the dynamic database when the second cost value is larger than the first cost value.

11. The system of claim 10, wherein the identification of the at least one cut within the netlist comprises:

   a) perform a window simulation to identify a dependency cut as the at least one cut; and/or

   b) extract a sub-network of nodes within the netlist based on a target node; and identify the at least one cut within a window, and wherein the identification of the at least one cut within the window comprises:

   identify a set of nodes between the target node and inputs to the at least one cut; and

   expand the set of nodes to include additional nodes with fan-ins contained within the set of nodes.

12. The system of claim 10 or 11, wherein the determinations of the first cost value for the at least one cut comprises: operate a multi-objective function that optimizes at least one of metric selected from a group comprising area, timing, power, toggle activity, or glitching.

13. The system of any one of claims 10 to 12, wherein the dynamic database comprises respective keys for corresponding stored sub-circuits, wherein each of the respective keys is based on a truth table of the corresponding stored sub-circuits, wherein obtaining the at least one sub-circuit from the dynamic database comprises:

   generate a key based on a binary representation of a truth table of the at least one cut; and

   query the dynamic database using the key to obtain the at least one sub-circuit.

14. The system of any one of claims 10 to 13, wherein the cost function includes an evaluation of dynamic switching activity within the netlist.

15. The system of any one of claims 10 to 14, wherein the at least one processor is configured to execute the instructions to:

   determine, using heuristic filtering, whether substituting the at least one cut with the at least one sub-circuit violates at least one design constraint of the netlist;

   and/or

   operate a machine learning model to learn a performance metric to be used for evaluating the first cost value and the second cost value;

   and/or

   perform design-space exploration by dynamically adjusting one or more optimization parameters toward minimizing a specified metric.

**Fig. 1**

EP 4 742 079 A1

iteration

t−2  t−1  t

208

200

202

210

212

214

220

212

218  001010110010  
10100010010  
11101010000

216

234

236

Sub-Network Candidates 230

250

database

248

**Fig. 2**

DEPENDENCY CUTS

EXTRACTION

window signatures 318

global signatures 316

window simulation 218

Fig. 3

Fig. 4

$f = a'b' + ac'$

netlist optimization 430

database optimization 440

Resynthesis Engine 202

Fig. 5

Fig. 6

700

## Switching Density Estimation's Error

$\langle |S_n^1(t) - S_n^2(t)| \rangle$ Absolute Error

Log-Number Of Input Pairs: $\log l$

**Fig. 7**

— 800

identify at least one cut within netlist  802

↓

obtain at least one sub-circuit from a dynamic database  804

↓

determine a first cost value for the at least one cut based on a cost function  806

↓

determine a second cost value for the at least one sub-circuit based on the cost function  808

↓

810 — first cost value larger than second cost value

—Yes— (left)    —No— (right)

replace the at least one sub-circuit with the at least one cut in the dynamic database  814

replace the at least one cut with the at least one sub-circuit in the netlist  812

**Fig. 8**

Fig. 9

EP 4 742 079 A1

**Client Computing Device** 906

Processor(s)

Memory
- Instructions
- Data

Output device(s)

Input device(s)

Communication Interface

912

910 Network

**Server Computing Devices** 902

Processor(s)

Memory
- Instructions
- Data

Communication Interface

908

**Storage System**
- Netlist(s)
- Integrated Circuit Design(s)
- cells, cuts, sub-circuits, optimization metrics

904

**Workstation**

Processor(s)

Memory
- Instructions
- Data

Output device(s)

Input device(s)

Communication Interface

**Fig. 10**

| | Europäisches Patentamt European Patent Office Office européen des brevets | **EUROPEAN SEARCH REPORT** | **Application Number** EP 25 21 0175 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHU XULIANG ET AL: "A Database Dependent Framework for K-Input Maximum Fanout-Free Window Rewriting", PROCEEDIONGS OF THE 60TH ACM/IEEE DESIGN AUTOMATION CONFERENCE, 9 July 2023 (2023-07-09), pages 1-6, XP034423390, DOI: 10.1109/DAC56929.2023.10247727 | 1,4-15 | INV. G06F30/27 G06F30/337 |
| Y | * the whole document * * abstract * * section i * * section iii * * algorithm 1 * * section ii.a * * algorithm 2 * * section iv.b * ----- | 2,3 | |
| Y | CALVINO ALESSANDRO TEMPIA ET AL: "Technology Mapping Using Multi-Output Library Cells", PROCEEDINGS OF THE IEEE/ACM INTERNATIONAL CONFERENCE ON COMPUTER AIDED DESIGN, 28 October 2023 (2023-10-28), pages 1-9, XP034479281, DOI: 10.1109/ICCAD57390.2023.10323999 | 2,3 | TECHNICAL FIELDS SEARCHED (IPC) G06F |
| A | * the whole document * * abstract * * section ii.b * ----- -/-- | 1,4-15 | |

The present search report has been drawn up for all claims

| Place of search | Date of completion of the search | Examiner |
|---|---|---|
| Munich | 9 March 2026 | Rungger, Matthias |

EPO FORM 1503 03.82 (P04C01)

**page 1 of 2**

Europäisches
Patentamt

European
Patent Office

Office européen
des brevets

# EUROPEAN SEARCH REPORT

**Application Number**

EP 25 21 0175

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anonymous: "Synopsys End-to-End Solution for Glitch Power Analysis and Optimization - YouTube", , 15 June 2023 (2023-06-15), XP093373867, Retrieved from the Internet: URL:https://www.youtube.com/watch?v=dG518EisgTA&t=123s * the whole document * * 01:21 to 01:32 * * 1:40 to 2:30 * ----- | 1-15 | |
| T | COSTAMAGNA ANDREA ET AL: "Lazy Man's Resynthesis For Glitching-Aware Power Minimization", 2025 IEEE 28TH INTERNATIONAL SYMPOSIUM ON DESIGN AND DIAGNOSTICS OF ELECTRONIC CIRCUITS AND SYSTEMS (DDECS), IEEE, 5 May 2025 (2025-05-05), pages 92-98, XP034920496, DOI: 10.1109/DDECS63720.2025.11006815 [retrieved on 2025-05-21] * the whole document * ----- | | TECHNICAL FIELDS SEARCHED (IPC) |

The present search report has been drawn up for all claims

| Place of search | Date of completion of the search | Examiner |
|---|---|---|
| Munich | 9 March 2026 | Rungger, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63719148

**Non-patent literature cited in the description**

- **COSTAMAGNA et al.** An Enhanced Resubstitution Algorithm for Area-Oriented Logic Optimization. *2024 IEEE INTERNATIONAL SYMPOSIUM ON CIRCUITS AND SYSTEMS (ISCAS)*, 19 May 2024, 1-5
- **YANG et al.** Lazy Man's Logic Synthesis. *2012 IEEE/ACM INTERNATIONAL CONFERENCE ON COMPUTER-AIDED DESIGN (ICCAD), San Jose, CA, USA*, 20 December 2012, 597-604